# EUROPÄISCHE PATENTSCHRIFT

(11) **EP 3 119 623 B1**
(45) Veröffentlichungstag und Bekanntmachung des Hinweises auf die Patenterteilung: **27.11.2019**
(21) Anmeldenummer: 15709918.5
(22) Anmeldetag: 12.03.2015
(51) Int. Cl.: B60H 1/00, B60H 1/32, F25B 25/00, F28F 3/08, H01M 10/625, H01M 10/6556

(54) **HEIZKÜHLMODUL**
HEATING AND COOLING MODULE
MODULE DE CHAUFFAGE ET DE REFROIDISSEMENT

(30) Priorität: 17.03.2014 DE 102014204935
(43) Veröffentlichungstag der Anmeldung: 25.01.2017
(73) Patentinhaber: Mahle International GmbH, 70376 Stuttgart (DE)
(72) Erfinder: DÜRR, Gottfried, 71640 Ludwigsburg (DE); HAUG, Joachim Michael, 74395 Mundelsheim (DE); HOFMANN, Herbert, 70376 Stuttgart (DE)
(74) Vertreter: Grauel, Andreas
(86) Internationale Anmeldenummer: PCT/EP2015/055178
(87) Internationale Veröffentlichungsnummer: WO 2015/140040

(56) Entgegenhaltungen:
- DE-A1-102010 026 507
- DE-A1-102011 078 136
- US-A1- 2012 210 746

## Beschreibung

### Technisches Gebiet

Die Erfindung betrifft ein Heizkühlmodul zum Temperieren von zumindest zwei Kühlmittelkreisläufen, mit einem Verdampferbereich und mit einem Kondensatorbereich, wobei der Verdampferbereich eine erste Strömungsstrecke aufweist, welche von einem ersten Kühlmittel durchströmbar ist, und der Kondensatorbereich eine zweite Strömungsstrecke aufweist, welche von einem zweiten Kühlmittel durchströmbar ist, und wobei das Heizkühlmodul eine dritte Strömungsstrecke aufweist, welche von einem Kältemittel durchströmbar ist.

### Stand der Technik

In Kraftfahrzeugen werden regelmäßig Verdampfer verwendet, um den Innenraum zu kühlen. Weiterhin werden Kondensatoren verwendet, welche die Wärme an die Außenluft abgeben. Regelmäßig werden den Kältemittelkreisläufen weitere Komponenten hinzugefügt, um weitere Funktionalitäten zu realisieren. Dieses geschieht beispielsweise, um die Heizung des Innenraumes zu ermöglichen oder zusätzlich verbaute Batterien zu kühlen. Dies ist insbesondere bei elektrisch angetriebenen Fahrzeugen zunehmend der Fall, um die zum Antrieb benötigten Batterien in einem optimalen Temperaturfenster zu betreiben.

Durch diese weiteren Komponenten werden die Kältemittelkreisläufe sehr komplex und fehleranfällig. Weiterhin besteht die Gefahr einer ungewollten Kältemittelverlagerung in stillliegende Bereiche des Kältemittelkreislaufes. Mit stillliegenden Bereichen sind beispielsweise zeitweise nicht durchströmte Bereiche gemeint. Zur Steuerung und Regelung dieser Kreisläufe sind Schaltventile notwendig, die einen erhöhten Einbauaufwand mit sich bringen und weiterhin ebenfalls die Fehleranfälligkeit erhöhen.

In einer alternativen Ausführung kann der Kältemittelkreislauf mit einem warmen und einem kalten Wasser-Glysantin-Kreislauf verbunden werden. Dabei kann die Wärme beliebig über Luft-Wasser-Wärmeübertrager ausgekoppelt werden. Zur Bereitstellung des wärmeren Wassers und des kälteren Wassers werden mindestens ein sogenannter Chiller und ein Kondensator benötigt. Ein Chiller dient hierbei insbesondere der Abkühlung eines den Chiller umströmenden Mediums. Im einfachsten Fall kann ein auf diese Weise erzeugter Kreislauf also aus einem Chiller, einem Kondensator, einem thermostatischen Expansionsventil (TXV) und einem Verdichter bestehen. Zusätzlich kann ein Sammler zum Ausgleich von Fluidschwankungen vorgesehen sein. Auch können ein wasserseitiger Unterkühlbereich oder ein innerer Wärmeübertrager vorgesehen sein, um eine Verbesserung des Wirkungsgrades herbeizuführen.

Nachteilig an dem im Stand der Technik bekannten Lösungen ist, dass die Vielzahl von verwendeten Elementen einen hohen Bauraumbedarf verursacht. Weiterhin muss eine Vielzahl von Verbindungsleitungen vorgesehen werden, um die einzelnen Elemente miteinander zu verbinden. Diese Verbindungen erhöhen den Montageaufwand und stellen eine zusätzliche Fehlerquelle dar. Weiterhin ist es nachteilig, dass in bisher bekannten Lösungen, welche durch eine Kombination mehrerer Wärmeübertragerelemente in einer Baueinheit gebildet sind, keine inneren Wärmeübertrager oder Chiller integriert sind.

Ein Heizkühlmodul mit Verdampferbereich und Kondensatorbereich auf einer Grundplatte wird in der US 2012/0210746 A1 gezeigt.

### Darstellung der Erfindung, Aufgabe, Lösung, Vorteile

Daher ist es die Aufgabe der vorliegenden Erfindung ein Heizkühlmodul bereitzustellen, welches einen kompakten Aufbau aufweist und einfach herstellbar ist. Darüber hinaus ist es die Aufgabe der Erfindung ein Heizkühlmodul bereitzustellen, welches einfach an unterschiedliche Anwendungsfälle anpassbar ist.

Die Aufgabe hinsichtlich des Heizkühlmoduls wird durch ein Heizkühlmodul mit den Merkmalen des Anspruchs 1 gelöst.

Ein Ausführungsbeispiel der Erfindung betrifft ein Heizkühlmodul zum Temperieren von zumindest zwei Kühlmittelkreisläufen, mit einem Verdampferbereich und mit einem Kondensatorbereich, wobei der Verdampferbereich eine erste Strömungsstrecke aufweist, welche von einem ersten Kühlmittel durchströmbar ist, und der Kondensatorbereich eine zweite Strömungsstrecke aufweist, welche von einem zweiten Kühlmittel durchströmbar ist, und wobei das Heizkühlmodul eine dritte Strömungsstrecke aufweist, welche von einem Kältemittel durchströmbar ist, wobei der Verdampferbereich und der Kondensatorbereich auf einer gemeinsamen Grundplatte angeordnet sind, welche die Fluidzuläufe und die Fluidabläufe für das erste Kühlmittel, das zweite Kühlmittel und das Kältemittel aufweist, wobei die Grundplatte Strömungskanäle aufweist, welche jeweils von einem der Kühlmittel oder dem Kältemittel durchströmbar sind, wobei der Verdampferbereich und der Kondensatorbereich über die Strömungskanäle mit den jeweiligen Fluidzuläufen und den jeweiligen Fluidabläufen der Grundplatte in Fluidkommunikation stehen.

Eine gemeinsame Grundplatte ist besonders vorteilhaft, da sie einerseits die Stabilität des gesamten Heizkühlmoduls erhöht und andererseits einer kompakten Bauform zuträglich ist. Dabei ist es besonders vorteilhaft, wenn die Grundplatte gleichzeitig die benötigten Fluidzuläufe und die benötigten Fluidabläufe aufweist und weiterhin Mittel, welche dazu geeignet sind, das Kältemittel und die Kühlmittel zu den jeweiligen Wärmeübertragerelementen zu leiten. Die Grundplatte kann somit eine Vielzahl von Anschlussleitungen ersetzen, welche zur Fluidversorgung der einzelnen Wärmeübertragerelemente nötig wären. Dies reduziert auch das benötigte Fluidvolumen, da die Zu- und Ableitungsstrecken wesentlich kürzer sind und damit ein niedrigeres Innenvolumen aufweisen.

Weiterhin bietet eine solche Konfiguration auch Vorteile hinsichtlich der Endmontage, da der benötigte Bauraum für das Heizkühlmodul geringer ausfallen kann, da keine zusätzlichen Zu- und Ableitungen benötigt werden. Außerdem ist das Gesamtgewicht eines erfindungsgemäßen Heizkühlmoduls geringer als ein Aufbau mit einer Vielzahl von einzelnen Wärmeübertragern.

Darüber hinaus bietet ein erfindungsgemäßes Heizkühlmodul einen modularen Aufbau, welcher es erlaubt auf einer Grundplatte unterschiedliche Konfigurationen der verschiedenen Wärmeübertragerelemente abzubilden. Das Heizkühlmodul kann somit einfach an unterschiedliche Anforderungen angepasst werden. Weiterhin kann eine große Anzahl an Gleichbauteilen verwendet werden. Insgesamt ist durch den erfindungsgemäßen Aufbau eine höhere Flexibilität erreicht.

Die dritte Strömungsstrecke wird insbesondere von einem Kältemittel durchströmt. Diese Strömungsstrecke kann sich dabei entlang des gesamten Heizkühlmoduls durch mehrere Wärmeübertragerelemente erstrecken. Insbesondere erstreckt sie sich sowohl durch den Verdampferbereich als auch durch den Kondensatorbereich. Dort findet zwischen dem Kältemittel, welches die dritte Strömungsstrecke durchströmt, und jeweils entweder dem ersten Kühlmittel oder dem zweiten Kühlmittel ein Wärmeübertrag statt.

Besonders vorteilhaft ist es weiterhin, wenn an oder in der Grundplatte ein thermostatisches Expansionsventil angeordnet ist, welches von dem Kältemittel durchströmbar ist.

Das Expansionsventil, welches verwendet wird, um das Kältemittel zu expandieren, kann bevorzugt direkt an oder auch innerhalb der Grundplatte angeordnet sein. Dies führt weiterhin zu einem kompakteren Aufbau und zusätzlich zu einem mechanischen Schutz des Expansionsventils durch die Wandungen, welche die Grundplatte begrenzen. Das Expansionsventil wird dabei bevorzugt wieder lösbar an beziehungsweise in die Grundplatte integriert.

Auch ist es vorteilhaft, wenn an oder in der Grundplatte ein Sammler angeordnet ist, welcher zur Sammlung und/oder Bevorratung und/oder zur Filterung und/oder zur Trocknung des Kältemittels dient. Ein Sammler ist besonders vorteilhaft, um Volumenschwankungen des Kältemittels über die Betriebsdauer auszugleichen. Auch kann durch einen Sammler mit Filtermitteln und/oder Trocknungsmitteln eine möglichst lange gleichbleibende Qualität des Kältemittels im Kältemittelkreislauf erreicht werden.

Ein bevorzugtes Ausführungsbeispiel ist dadurch gekennzeichnet, dass ein innerer Wärmeübertrager und/oder ein Unterkühlbereich an der Grundplatte angeordnet ist, wobei der innere Wärmeübertrager und/oder der Unterkühlbereich ebenfalls mit Strömungskanälen der Grundplatte in Fluidkommunikation stehen und durchströmbar sind.

Ein innerer Wärmeübertrager ist vorteilhaft, um einen weiteren Wärmeübertrag zwischen dem Kältemittel, welches den Verdampferbereich durchströmt hat, und dem Kältemittel, welches den Kondensatorbereich durchströmt hat, zu erreichen. Ein solcher zusätzlicher Wärmeübertrag steigert zusätzlich die Effizienz des Heizkühlmoduls. Ein Unterkühlbereich ist vorteilhaft, um eine weitere Abkühlung des Kältemittels unter die Kondensationstemperatur zu erreichen. Durch ein noch weiter abgekühltes Kältemittel kann insgesamt auch die Effizienz gesteigert werden. In vorteilhaften Ausgestaltungen können sowohl ein innerer Wärmeübertrager als auch ein Unterkühlbereich vorgesehen sein. Wahlweise kann auch nur jeweils eines der beiden Wärmeübertragerelemente vorgesehen sein.

Die fluidische Anbindung an Strömungskanäle beziehungsweise Leitungsstrukturen innerhalb der Grundplatte sind weiterhin vorteilhaft, um eine kompakte Bauform des Heizkühlmoduls zu erreichen. Durch die Nutzung der Grundplatte als Anschlusselement und Verteilerelement kann insgesamt die Anzahl an Verbindungsstellen im Kältemittelkreislauf und im Kühlmittelkreislauf reduziert werden, was die Robustheit des Systems erhöht. Die vom Kältemittel durchströmte Strömungsstrecke muss vorzugsweise nur noch an den Verdichter des Kältemittelkreislaufes angebunden werden.

Durch die kompakte Bauform und die weitestgehende Integration der Fluidkreisläufe in die Grundplatte und die Wärmeübertragerelemente sind weiterhin keine Schaltelemente, wie beispielsweise Ventile, notwendig, wodurch das System ebenfalls robuster wird und wartungsärmer.

Weiterhin ermöglicht es die kompakte Bauform, dass das Heizkühlmodul in einen besonders sicheren Bereich angeordnet werden kann, welcher im Falle eines Unfalls eine Beschädigung des Heizkühlmoduls verhindert oder zumindest die Wahrscheinlichkeit einer Beschädigung deutlich reduziert. Dies ist besonders vorteilhaft, wenn ein brennbares Kältemittel verwendet wird.

Bevorzugt kann das Heizkühlmodul für die Verwendung von R-134a, R-1234yf oder anderen sogenannten Niederdruckkältemitteln verwendet werden. Unter anderem kann auch Propan hierfür vorgesehen werden. Grundsätzlich ist das Heizkühlmodul jedoch auch für Hochdruckkältemittel, wie beispielsweise R-744, verwendbar. Anstelle eines Kondensatorbereichs wird dann ein sogenannter Gaskühler vorgesehen.

Auch ist es zu bevorzugen, wenn der Verdampferbereich und/oder der Kondensatorbereich und/oder der innere Wärmeübertrager und/oder der Unterkühlbereich und/oder der Sammler in Stapelscheibenbauweise durch eine Aufeinanderstapelung mehrerer Scheibenelemente ausgebildet sind. Bevorzugt sind die vorgenannten Wärmeübertragerelemente in einer Stapelscheibenbauweise aufgebaut. Dies ist vorteilhaft, um einen einfachen Aufbau zu erreichen. In Stapelscheibenbauweise erzeugte Wärmeübertragerelemente können kostengünstig hergestellt werden, da eine Vielzahl von Gleichteilen verwendet werden kann. Weiterhin sind sie einfach skalierbar und somit an die jeweils zu erwartende Belastung anpassbar.

Darüber hinaus ist es vorteilhaft, wenn die auf der Grundplatte angeordneten Wärmeübertragerelemente in einer Richtung quer zur Stapelrichtung eines der Scheibenstapel zueinander benachbart an einer Außenfläche der Grundplatte angeordnet sind.

Eine zueinander benachbarte Anordnung an einer gemeinsamen Außenfläche der Grundplatte ist vorteilhaft, um eine kompakte Bauform zu erreichen. Gleichzeitig kann durch die Beabstandung eine thermische Isolation der einzelnen Wärmeübertragerelemente zueinander erreicht werden. Die Anordnung an einer gemeinsamen Außenfläche ist vorteilhaft, da die Zu- und die Ableitungen dann ebenfalls an einer gemeinsamen Außenfläche angeordnet werden können. Außerdem kann der regelmäßig für ein solches Heizkühlmodul zur Verfügung stehende Bauraum insgesamt besser ausgenutzt werden.

Auch ist es vorteilhaft, wenn der Kondensatorbereich und/oder der Verdampferbereich und/oder der Sammler und/oder der innere Wärmeübertrager und/oder der Unterkühlbereich durch gemeinsame Scheibenelemente gebildet ist, wobei die einzelnen Wärmeübertragerelemente durch Trennelemente in den jeweiligen Scheibenelementen voneinander fluidisch getrennt sind.

Ein Heizkühlmodul mit gemeinsamen Scheibenelementen für die einzelnen Wärmeübertragerelemente kann vorteilhaft sein, da die unterschiedlichen Wärmeübertragerelemente in einem gemeinsamen Arbeitsschritt hergestellt werden können. Um die einzelnen Wärmeübertragerelemente fluidisch derart voneinander zu trennen, dass keine ungewollte Vermischung der Kühlmittel untereinander oder mit dem Kältemittel entsteht, sind vorzugsweise Trennelemente im Inneren des gemeinsamen Scheibenstapels vorgesehen. In vorteilhafter Weiterbildung können innerhalb des gemeinsamen Scheibenstapels auch thermische Isolationselemente vorgesehen sein.

Auch ist es zweckmäßig, wenn die Grundplatte Strömungskanäle aufweist, durch welche Wärmeübertragerelemente, die nicht direkt zueinander benachbart angeordnet sind, fluidisch miteinander verbindbar sind.

Strömungskanäle innerhalb der Grundplatte sind vorteilhaft, um nicht direkt zueinander benachbarte Wärmeübertragerelemente fluidisch miteinander zu verbinden. Durch die Grundplatte können somit Bypässe erzeugt werden, die es ermöglichen, das Kältemittel und/oder eines oder beide Kühlmittel gezielt an einzelnen Wärmeübertragerelementen vorbeizuführen. Hierdurch kann der entlang des Heizkühlmoduls entstehende Wärmeübertrag zwischen den einzelnen Wärmeübertragerelementen und insbesondere zwischen den Fluiden gezielt beeinflusst werden.

In einer alternativen Ausführung ist es vorteilhaft, wenn die Grundplatte mehrteilig ausgebildet ist, wobei die Strömungskanäle im Inneren der Grundplatte angeordnet sind und durch ein Abdeckelement oder mehrere Abdeckelemente nach außen überdeckt sind.

Vorteilhafterweise kann die Grundplatte beispielsweise durch eine kastenförmige Struktur gebildet sein, in welcher Einlegeelemente vorgesehen sind, durch die die Strömungskanäle im Inneren der Grundplatte ausgeformt werden. Die kastenförmige Struktur kann über ein Abdeckelement fluiddicht verschlossen werden. In einer vorteilhaften Gestaltung können die kastenförmige Struktur, die Einlegeelemente und das Abdeckelement miteinander dauerhaft verbunden werden. In einer alternativen Ausgestaltung können die Strömungskanäle auch durch ein spanendes Verfahren aus einem Vollkörper erzeugt werden. Die Strömungskanäle können anschließend über Abdeckelemente verschlossen werden.

Die Grundplatte erfüllt von Ihrem Aufbau her eine Funktion, welche den Platinen in elektrischen Schaltungen nachempfunden ist. Sie dient einerseits als Trägerelement für die Wärmeübertragerelemente und weiterhin als Verbindungsmittel, welches die Strömungskanäle bereithält, um eine fluidische Verbindung zu erzeugen. Analog einer klassischen Platine können die Strömungskanäle dabei auch in mehreren Ebenen innerhalb der Grundplatte ausgebildet sein oder auch an einer ihrer Außenflächen verlaufen.

Darüber hinaus ist es vorteilhaft, wenn die Fluidzuläufe und die Fluidabläufe an einer gemeinsamen Außenfläche der Grundplatte angeordnet sind. Dies ist besonders vorteilhaft, um eine möglichst kompakte Bauform des Heizkühlmoduls zu erreichen und im Wartungs- oder Reparaturfall eine einfache Zugänglichkeit zu den Fluidzuläufen und Fluidabläufen zu ermöglichen.

Weiterhin ist es vorteilhaft, wenn die Außenfläche der Grundplatte, welche die Fluidzuläufe und die Fluidabläufe aufweist, der Außenfläche, an welcher die Wärmeübertragerelemente angeordnet sind, gegenüberliegt. Dies ist besonders vorteilhaft, um eine kompakte Bauform des Heizkühlmoduls zu erreichen. Außerdem kann auf diese Weise eine direkte Durchleitung eines Fluids durch die Grundplatte hindurch in eines der Wärmeübertragerelemente hinein erreicht werden, ohne dass das Fluid zusätzlich umgelenkt werden muss. Hierdurch wird der auftretende Druckverlust im Heizkühlmodul reduziert, wodurch insgesamt die Effizienz gesteigert werden kann.

Auch ist es zweckmäßig, wenn die einzelnen Wärmeübertragerelemente thermisch voneinander isoliert sind. Eine thermische Isolation kann vorteilhaft sein, um ungewollte Wärmeüberträge zu vermeiden. Hierdurch kann insgesamt die Effizienz des Heizkühlmoduls verbessert werden.

Ein weiteres Ausführungsbeispiel ist dadurch gekennzeichnet, dass die einzelnen Wärmeübertragerelemente unterschiedliche Außenabmessungen und/oder unterschiedliche Innenvolumen aufweisen. Dies ist besonders vorteilhaft, um die einzelnen Wärmeübertrager besser an die auftretenden Belastungen anpassen zu können. Hierbei ist insbesondere der jeweils notwendige Wärmeübertrag als Kenngröße für die Dimensionierung relevant. Durch eine bedarfsgerechte Anpassung des Innenvolumens kann insbesondere erreicht werden, dass die im Heizkühlmodul zirkulierende Fluidmenge möglichst gering ist.

Auch ist es vorteilhaft, wenn die Grundplatte Positionierelemente aufweist, welche einen Aufnahmebereich für zumindest eines der Wärmeübertragerelemente ausbilden. Positionierelemente können beispielsweise Vertiefungen und/oder Erhebungen sein, welche es ermöglichen, ein entweder bereits vormontiertes Wärmeübertragerelement oder die Grundplatte des Wärmeübertragerelementes derart gegenüber der Grundplatte zu positionieren, dass eine vereinfachte Ausrichtung zwischen den Fluidöffnungen der Grundplatte und den korrespondierenden Fluidöffnungen des jeweiligen Wärmeübertragerelementes ermöglicht ist. Dies vereinfacht die Montage insgesamt, wodurch Kosten eingespart werden können.

Erfindungsgemäß ist es vorteilhaft, wenn sämtliche Bauteile, außer ein evtl. vorliegendes TXV-Expansionsventil und evtl. ein vorliegender Filter, in einer Komplettlötung herstellbar sind. Dies kann bedeuten, dass die angesprochenen Bauteile in einem Lötvorgang komplett gelötet werden. Bei Verwendung eines so genannten Orifice-Expansionsventils könnte dieses sogar mitgelötet werden.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig.1 bis 17: jeweils eine schematische Ansicht eines Heizkühlmoduls, wobei insbesondere die unterschiedlichen Wärmeübertragerelemente dargestellt sind und eine Auswahl unterschiedlicher Anordnungsreihenfolgen der Wärmeübertragerelemente auf einer gemeinsamen Grundplatte,
- Fig. 18: eine schematische Ansicht eines erfindungsgemäßen Heizkühlmoduls, wobei insbesondere eine mögliche Ausrichtung des Heizkühlmoduls in Einbaulage gezeigt ist,
- Fig. 19: eine schematische Seitenansicht eines Heizkühlmoduls mit einem Verdampferbereich, einem Kondensatorbereich, einem Sammler und einem inneren Wärmeübertrager,
- Fig. 20: eine Aufsicht auf das Heizkühlmodul gemäß Fig. 19,
- Fig. 21: eine schematische Seitenansicht eines alternativen Ausführungsbeispiels eines Heizkühlmoduls, mit einem Verdampferbereich, einem Kondensatorbereich, einem Sammler, einem inneren Wärmeübertrager und einem Unterkühlbereich,
- Fig. 22: eine Aufsicht auf das Heizkühlmodul gemäß Fig. 21,
- Fig. 23: eine schematische Seitenansicht eines alternativen Ausführungsbeispiels eines Heizkühlmoduls, mit einem Verdampferbereich, einem Kondensatorbereich, einem Sammler und einem Unterkühlbereich,
- Fig. 24: eine Aufsicht auf das Heizkühlmodul gemäß Fig. 23,
- Fig. 25: eine schematische Ansicht eines erfindungsgemäßen Heizkühlmoduls, wobei insbesondere eine alternative Ausrichtung des Heizkühlmoduls in Einbaulage gezeigt ist,
- Fig. 26: eine schematische Ansicht eines Heizkühlmoduls gemäß Fig. 19, wobei die Ausrichtung abweichend von Fig. 19 ist und die einzelnen Wärmeübertragerelemente von oben nach unten ein Kondensatorbereich, ein Sammler, ein innerer Wärmeübertrager und ein Verdampferbereich sind, und
- Fig. 27: eine Seitenansicht auf das Heizkühlmodul gemäß Fig. 26.

### Bevorzugte Ausführung der Erfindung

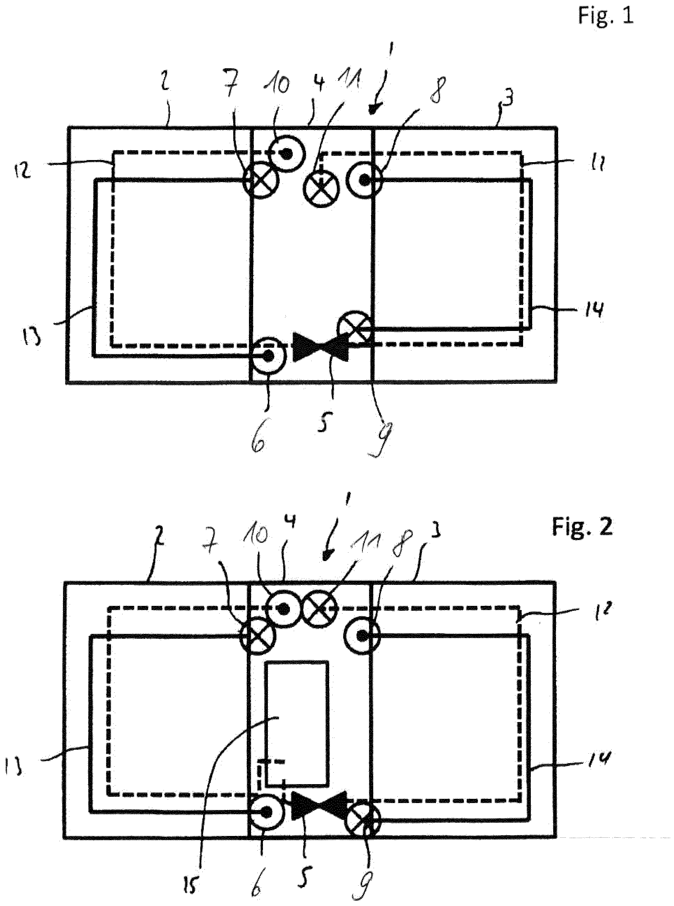

Die Fig. 1 bis 17 zeigen jeweils eine schematische Ansicht eines Heizkühlmoduls 1. Alle gezeigten Heizkühlmodule 1 weisen jeweils einen ersten Fluidzulauf 6 und einen ersten Fluidablauf 7 auf, durch welche ein Kühlmittel in das Heizkühlmodul 1 einströmen und aus diesem ausströmen kann. Dabei wird insbesondere der Kondensatorbereich 2 des Heizkühlmoduls 1 durchströmt. Weiterhin weisen alle Heizkühlmodule 1 einen zweiten Fluidzulauf 8 und einen zweiten Fluidablauf 9 auf, durch welche ebenfalls ein Kühlmittel einströmen und wieder ausströmen kann, wobei hauptsächlich der Verdampferbereich 3 des Heizkühlmoduls 1 von diesem Kühlmittel durchströmt wird. Weiterhin weisen alle Heizkühlmodule 1 einen dritten Fluidzulauf 10 und einen dritten Fluidablauf 11 auf, durch weichen ein Kältemittel in das Heizkühlmodul 1 einströmen kann und aus diesem wieder ausströmen kann. Das Kältemittel durchströmt dabei bevorzugt alle Bereiche 2, 3 des Heizkühlmoduls 1.

Die Strömungsstrecke 13 bezeichnet den Strömungsweg des Kühlmittels im Kondensatorbereich 2. Die Strömungsstrecke 14 bezeichnet den Strömungsweg des Kühlmittels innerhalb des Verdampferbereichs 3. Weiterhin bezeichnet die Strömungsstrecke 12 den Strömungsweg des Kältemittels zwischen dem dritten Fluidzulauf 10 und dem dritten Fluidablauf 11. Die Strömungsstrecke 12 verläuft dabei regelmäßig durch den Verdampferbereich 3 und den Kondensatorbereich 2.

Alle Fig. 1 bis 17 weisen jeweils ein mit dem Bezugszeichen 5 bezeichnetes Expansionsventil auf. Dieses ist jeweils in die Strömungsstrecke 12 des Kältemittels integriert und ist jeweils an oder in dem Heizkühlmodul 1 angeordnet. Dieses Expansionsventil 5 entspricht einem regulären Expansionsventil, wie es in Kältemittelkreisläufen in anderen Lösungen im Stand der Technik verwendet wird. Das Expansionsventil 5 kann dabei bevorzugt nachträglich in das Heizkühlmodul 1 eingesetzt werden und mit dem Heizkühlmodul 1 verschraubt werden oder einfach eingesteckt werden.

Das Heizkühlmodul 1 weist mehrere Wärmeübertragerelemente auf. Hierzu können der Verdampferbereich, der Kondensatorbereich, der Sammler, der innere Wärmeübertrager oder ein Unterkühlbereich zählen. Je nach Ausgestaltung des Heizkühlmoduls 1 sind zumindest ein Verdampferbereich und ein Kondensatorbereich vorgesehen. Die übrigen Wärmeübertragerelemente können vorgesehen sein, müssen jedoch nicht zwingend vorgesehen sein.

Die schematischen Abbildungen der Fig. 1 bis 17 zeigen unterschiedliche Anordnungsprinzipien der einzelnen Wärmeübertragerelemente zueinander. Außerdem ist in den Fig. 1 bis 17 jeweils eine mögliche Ausgestaltung der Strömungsstrecken 12, 13 und 14 durch die Heizkühlmodule 1 dargestellt.

In bevorzugten Weiterbildungen können die einzelnen Wärmeübertragerelemente nicht, wie gezeigt, in einem gemeinsamen Block angeordnet sein, sondern in einzelnen individuellen Bereichen und beabstandet zueinander. Bevorzugt sind die einzelnen Wärmeübertragerelemente dabei auf einer gemeinsamen Grundplatte angeordnet, welche mehrere Strömungskanäle ausbildet und weiterhin die Fluidzuläufe und die Fluidabläufe für die Kühlmittel und das Kältemittel aufweist. Die Grundplatte ist dabei unter anderem durch die Bereiche 4, 18 und 19 dargestellt, welche in den Fig. 1 bis 17 dargestellt sind. Weiterhin wird die Zu- und Ableitung von Kühlmittel und/oder Kältemittel zwischen den einzelnen Wärmeübertragerelementen durch die Strömungskanäle in der Grundplatte erreicht. In vorteilhaften Ausgestaltungen können jedoch auch Tauchhülsen oder anderweitige Rohrleitungen vorgesehen sein, welche die einzelnen Wärmeübertragerelemente miteinander fluidisch verbinden können.

Die Fig. 1 bis 17 dienen insbesondere dazu, eine Übersicht über die möglichen Anordnungsformen und dabei insbesondere über die Reihung der einzelnen Wärmeübertragerelemente zu geben.

Im Ausführungsbeispiel der Fig. 1 ist im linken Bereich ein Kondensatorbereich 2 angeordnet und im rechten Bereich ein Verdampferbereich 3. Die beiden Bereiche 2, 3 sind räumlich getrennt voneinander angeordnet, so dass in der Fig. 1 der Blick auf den Bereich 4 der Grundplatte fällt. Auf dieser gemeinsamen Grundplatte sind die Wärmeübertragerelemente angeordnet. Die Fig. 1 bis 17 zeigen dabei jeweils eine Aufsicht auf die Außenfläche der Grundplatte, welche die Wärmeübertragerelemente aufweist. Die Fluidzuläufe und die Fluidabläufe 6 bis 11 sind dabei jeweils bevorzugt an der von dem Betrachter abgewandten Außenfläche der Grundplatte angeordnet.

Im Ausführungsbeispiel der Fig. 1 ist der Kondensatorbereich 2 einfach in einer U-förmigen Form durchströmt. Das heißt, es findet keine weitere Umlenkung innerhalb des Kondensatorbereichs 2 statt. Ebenso wird der Verdampferbereich 3 in einer U-förmigen Schleife durchströmt, ohne weitere Umlenkungen vorzusehen. Das Kältemittel strömt durch den Bereich 4, welcher durch die Grundplatte gebildet ist, und durchströmt U-förmig den rechts gelegenen Verdampferbereich 3. Das Expansionsventil 5 ist dem Kondensatorbereich 2 nachgeordnet innerhalb des Bereichs 4 angeordnet und ist weiterhin in Strömungsrichtung des Kältemittels vor dem Verdampferbereich 3 angeordnet. Der Kondensatorbereich 2 wird ebenfalls U-förmig mit dem Kältemittel durchströmt. Danach wird das Kältemittel über den dritten Fluidablauf 11 aus dem Heizkühlmodul 1 ausgeführt.

Die in den Fig. 1 bis 17 gezeigten Heizkühlmodule 1 weisen jeweils Fluidzuläufe und Fluidabläufe 6 bis 11 auf, welche seitlich an dem Heizkühlmodul 1 angebracht sind. Diese können bevorzugt an einer gemeinsamen Außenfläche angeordnet sein.

Die Fig. 2 zeigt eine alternative Ausgestaltung des Heizkühlmoduls 1, wobei an der Grundplatte 4 zusätzlich ein sogenannter Sammler 15 vorgesehen ist, welcher in Strömungsrichtung dem Expansionsventil 5 vorgelagert ist und dem Kondensatorbereich 2 nachgelagert ist. Die restliche Durchströmung des Heizkühlmoduls der Fig. 2 entspricht dem Ausführungsbeispiel der Fig. 1. Der Sammler 15 dient insbesondere zur Bevorratung von Kältemittel und kann dadurch einen Volumenausgleich bewirken. Weiterhin können im Sammler 15 Mittel zur Trocknung und/oder zur Filterung des Kältemittels vorgesehen sein.

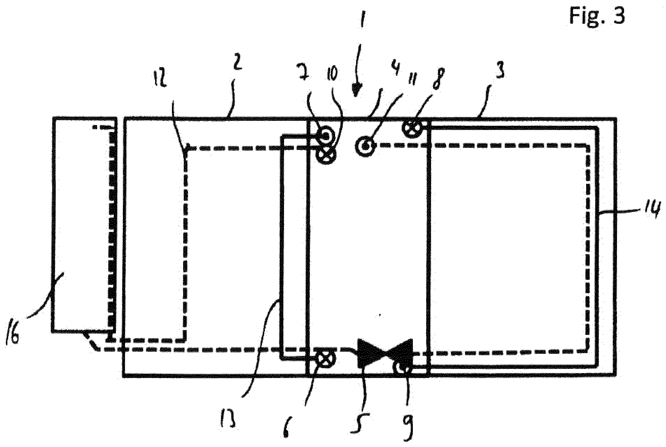

Die Fig. 3 zeigt ein weiteres alternatives Ausführungsbeispiel eines Heizkühlmoduls 1. Hier ist ein externer Sammler 16 außerhalb des Heizkühlmoduls 1 angeordnet. Dieser ist benachbart zum Kondensatorbereich 2 angeordnet. Der externe Sammler 16 ist in Strömungsrichtung entlang der Strömungsstrecke 12 dem Expansionsventil 15 vorgelagert und dem Kondensatorbereich 2 nachgelagert. Der Kondensatorbereich 2 wird weiterhin U-förmig von einem Kühlmittel durchströmt, ebenso wird auch der Verdampferbereich 3 von einem Kühlmittel U-förmig durchströmt.

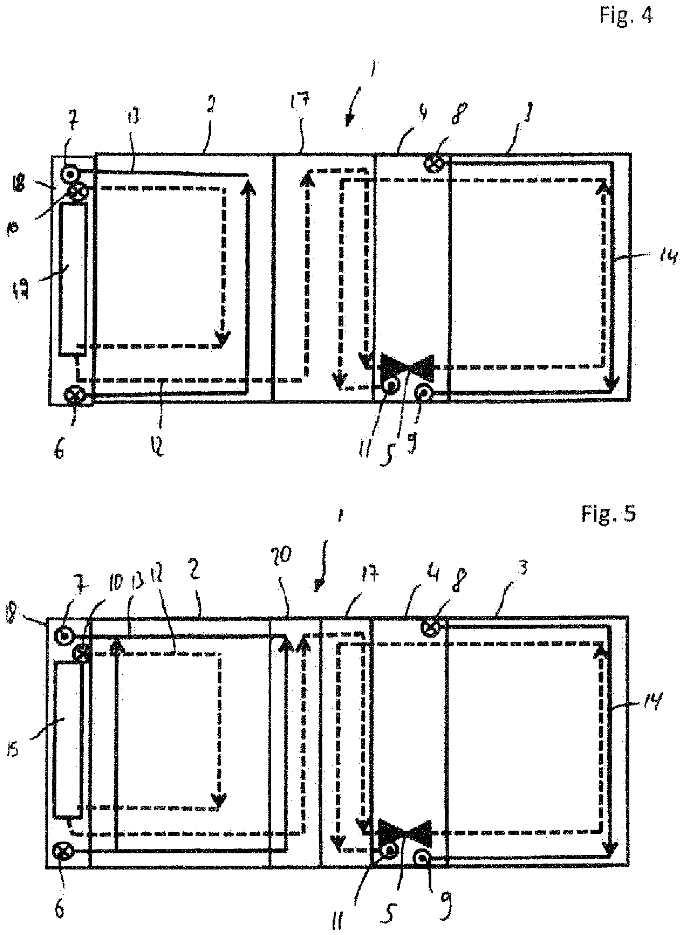

Die Fig. 4 zeigt eine weitere alternative Ausführungsform eines Heizkühlmoduls 1 mit einem Kondensatorbereich 2 und einem Verdampferbereich 3. Weiterhin ist in einem Bereich 17 ein innerer Wärmeübertrager realisiert. In diesem inneren Wärmeübertrager 17 kann insbesondere ein Wärmeaustausch zwischen dem aus dem Kondensatorbereich 2 strömenden Kältemittel und dem aus dem Verdampferbereich 3 strömenden Kältemittel erreicht werden. Hierzu wird das Kältemittel in mehreren Schleifen und mit mehreren Umlenkungen durch den Bereich 17 geführt. Weiterhin ist ein Sammler 15 auf der Grundplatte vorgesehen. Dieser ist in dem mit dem Bezugszeichen 18 bezeichneten Bereich der Grundplatte angeordnet. Auch sind in diesem Bereich der dritte Zulauf 10, der erste Zulauf 6 und der erste Ablauf 7 angeordnet. Der zweite Zulauf 8, der zweite Ablauf 9, der dritte Ablauf 11 und das Expansionsventil 5 sind jeweils in dem mit dem Bezugszeichen 4 gekennzeichneten Bereich der Grundplatte angeordnet.

Der Kondensatorbereich 2 wird U-förmig von dem Kältemittel durchströmt, bevor es in den links neben dem Kondensatorbereich 2 angeordneten Sammler 15 einströmt. Schließlich wird das Kältemittel nach dem Austritt aus dem Sammler 15 durch einen Strömungskanal in der Grundplatte in den inneren Wärmeübertrager 17 hineingeführt. Nach dem inneren Wärmeübertrager 17 wird der Verdampferbereich 3 U-förmig von dem Kältemittel durchströmt, bevor das Kältemittel schließlich zurück in den inneren Wärmeübertrager 17 geführt wird und von dort zum unten liegenden dritten Fluidablauf 11 geführt wird.

Die Fig. 5 zeigt eine Ausgestaltung des Heizkühlmoduls 1, wobei zwischen dem inneren Wärmeübertrager 17 und dem Kondensatorbereich 2 ein Unterkühlbereich 20 angeordnet ist. Links neben dem Kondensatorbereich 2 ist ebenfalls ein mit dem Bezugszeichen 18 bezeichneter Bereich der Grundplatte dargestellt, an welchem ein Sammler 15 angeordnet ist. Zusätzlich zum inneren Wärmeübertrager 17 wird nun auch der Unterkühlbereich 20 von dem Kältemittel und von dem Kühlmittel des Kondensatorbereichs 2 durchströmt. Auf diese Weise wird eine weitere Abkühlung des Kältemittels im Unterkühlbereich 20 erreicht, wodurch die Effizienz des Heizkühlmoduls 1 insgesamt erhöht werden kann. Der Aufbau der Grundplatte in dem mit dem Bezugszeichen 4 gekennzeichneten Bereich entspricht weiterhin der Darstellung, wie sie bereits in der Fig. 4 gezeigt wurde.

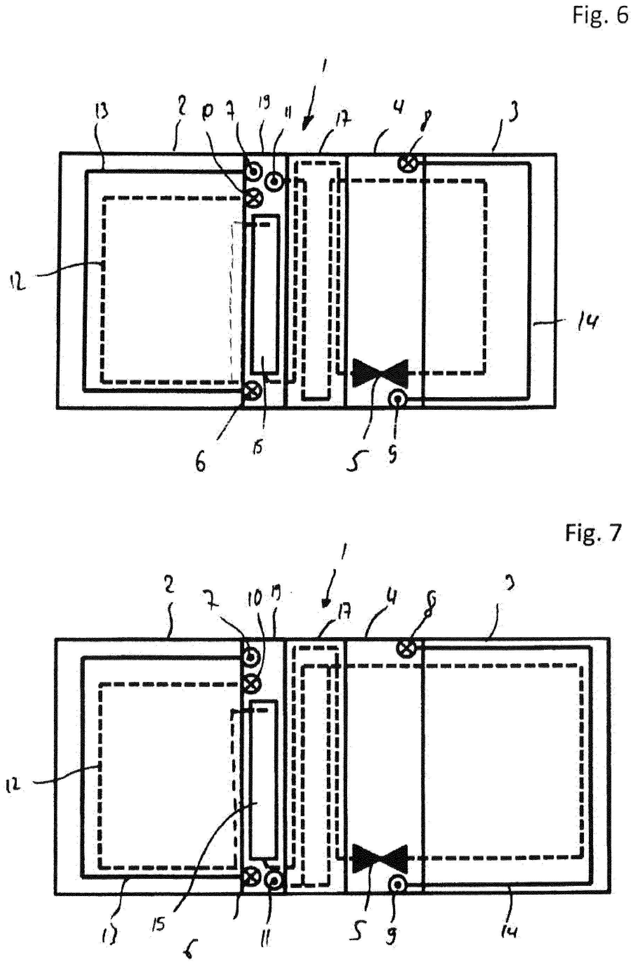

Die Fig. 6 zeigt eine alternative Anordnung eines Verdampferbereichs 3 am rechten Endbereich mit einem daneben angeordneten Bereich 4 der Grundplatte, einem daneben angeordneten inneren Wärmeübertrager 17 sowie einem weiteren Bereich 19 der Grundplatte, welcher einen Sammler 15 aufweist. Links neben dem Bereich 19 ist der Kondensatorbereich 2 angeordnet. Das Kältemittel strömt am Bereich 19 in das Heizkühlmodul ein und durchströmt den Kondensatorbereich 2 U-förmig, bevor es in den Sammler 15 überströmt. Vom Sammler 15 strömt das Kältemittel letztlich in den inneren Wärmeübertrager 17, bevor es durch das Expansionsventil 5 strömt und in den Verdampferbereich 3 einströmt. Zwischen dem Kältemittel, welches aus dem Verdampferbereich 3 ausströmt, und dem Kältemittel, welches aus dem Sammler 15 ausströmt, wird schließlich im inneren Wärmeübertrager 17 ein Wärmeübertrag erreicht. Das Kältemittel strömt dann über den dritten Fluidablauf 11 aus dem Heizkühlmodul 1 aus. Der Kondensatorbereich 2 sowie der Verdampferbereich 3 werden jeweils U-förmig ohne weitere Umlenkung von dem Kühlmittel durchströmt.

Das Ausführungsbeispiel der Fig. 7 entspricht dem der Fig. 6 weitestgehend, jedoch mit dem Unterschied, dass das aus dem Verdampferbereich 3 strömende Kältemittel im inneren Wärmeübertrager 17 in zwei parallelen Strömungswegen von oben nach unten geführt wird und schließlich über einen unten liegenden dritten Fluidablauf 11 aus dem Heizkühimodul 1 ausgeführt wird.

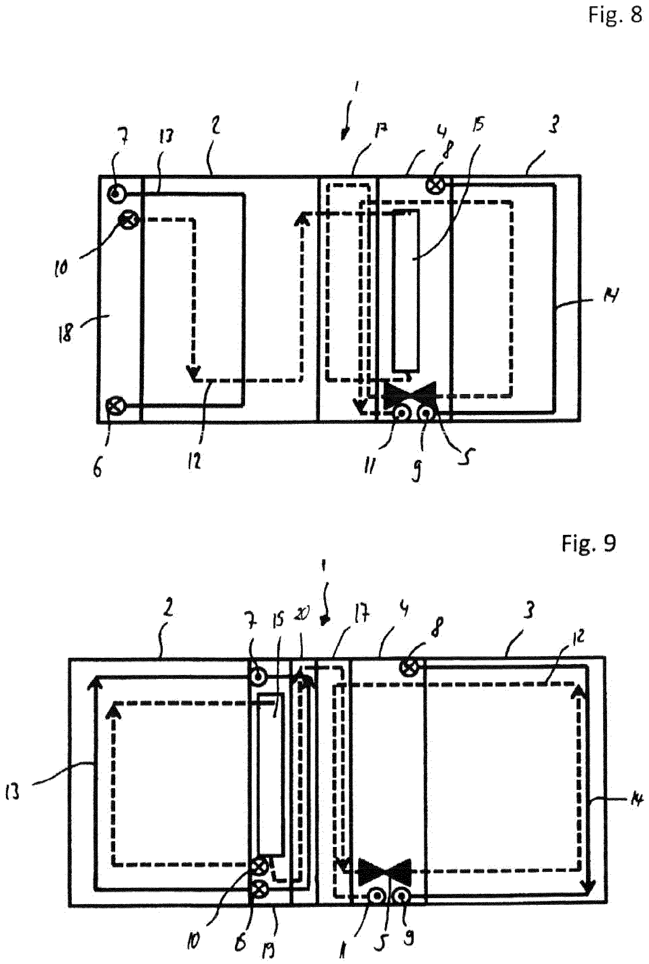

Im Ausführungsbeispiel der Fig. 8 ist der Sammler 15 im Bereich 4 der Grundplatte angeordnet. Über diesen Bereich 4 strömt das Kühlmittel für den Verdampferbereich 3 über den zweiten Fluidzulauf 8 zu und über den zweiten Fluidablauf 9 ab. Links neben dem Bereich 4 ist ein innerer Wärmeübertrager 17 angeordnet, in welchem das Kältemittel des Kondensatorbereichs 2 mit dem Kältemittel des Verdampferbereichs 3 in Wärmeaustausch gebracht wird. Links neben dem Kondensatorbereich 2 ist ein Bereich 18 der Grundplatte angeordnet, welcher den dritten Zulauf 10, den ersten Zulauf 6 und den ersten Ablauf 7 aufweist. Der dritte Zulauf 10 ist am oberen Endbereich angeordnet und das Kältemittel durchströmt den Kondensatorbereich U-förmig von oben nach unten und schließlich wieder zurück nach oben und tritt am oberen Bereich durch den inneren Wärmeübertrager 17 hindurch in den Sammler 15 über, welcher im Bereich 4 angeordnet ist. Von dort strömt das Kältemittel im unteren Bereich zurück in den inneren Wärmeübertrager 17, wo es schleifenförmig umgelenkt wird, und nachdem es einen oberen Bereich des inneren Wärmeübertragers 17 durchströmt hat im unteren Bereich zurück in den Bereich 4 und dort in das Expansionsventil 5 strömt. Das Kältemittel strömt dann U-förmig von unten nach oben durch den Verdampferbereich 3 und zurück in den inneren Wärmeübertrager 17 und dort von oben nach unten hin zum dritten Fluidauslass 11.

Die Fig. 9 zeigt eine Anordnung, wobei links neben dem Bereich 4 ein innerer Wärmeübertrager 17, ein Unterkühlbereich 20 und ein Bereich 19 angeordnet sind. Im linken Bereich 19 ist weiterhin ein Sammler 15 angeordnet. Das Kältemittel strömt im Beispiel der Fig. 9 durch den dritten Fluidzulauf im Bereich 19 im unteren Bereich ein und durchströmt den Kondensatorbereich 2 U-förmig, bevor es im oberen Bereich in den Sammler 15 eintritt. Aus dem Sammler 15 strömt das Kältemittel am unteren Ende des Sammlers 15 aus und wird schließlich im Unterkühlbereich 20 im Gleichstrom mit dem Kühlmittel des Kondensatorbereichs 2 geführt, bevor es im oberen Bereich in den inneren Wärmeübertrager 17 überführt wird und nach einer Umlenkung im unteren Bereich schließlich durch das Expansionsventil 5 in den Verdampferbereich 3 einströmt. Vom Verdampferbereich 3, wo es U-förmig strömt, wird es letztlich durch den Bereich 4 in den inneren Wärmeübertrager 17 zurückgeleitet und dort von oben nach unten hin zum unten liegenden dritten Fluidabfluss 11 geführt. Auf diese Weise ist im Unterkühlbereich 20 ein weiterer Wärmeübertrag zwischen dem Kältemittel und dem Kühlmittel des Kondensatorbereichs 2 gewährleistet und im inneren Wärmeübertrager 17 ein Wärmeübertrag zwischen dem Kältemittel aus dem Kondensatorbereich 2 und dem Verdampferbereich 3.

Das Kühlmittel des Verdampferbereichs 3 wird weiterhin U-förmig durch diesen geführt. Das Kühlmittel für den Kondensatorbereich 2 wird an einem unten liegenden ersten Fluidzulauf 6 in den Bereich 19 eingeführt und dort in zwei Richtungen nach links und nach rechts sowohl in den inneren Wärmeübertrager 20 als auch in den Kondensatorbereich 2 geführt. Dort strömt es jeweils nach oben und strömt schließlich über den am oberen Endbereich liegenden ersten Fluidablauf 7 aus dem Heizkühlmodul 1 aus.

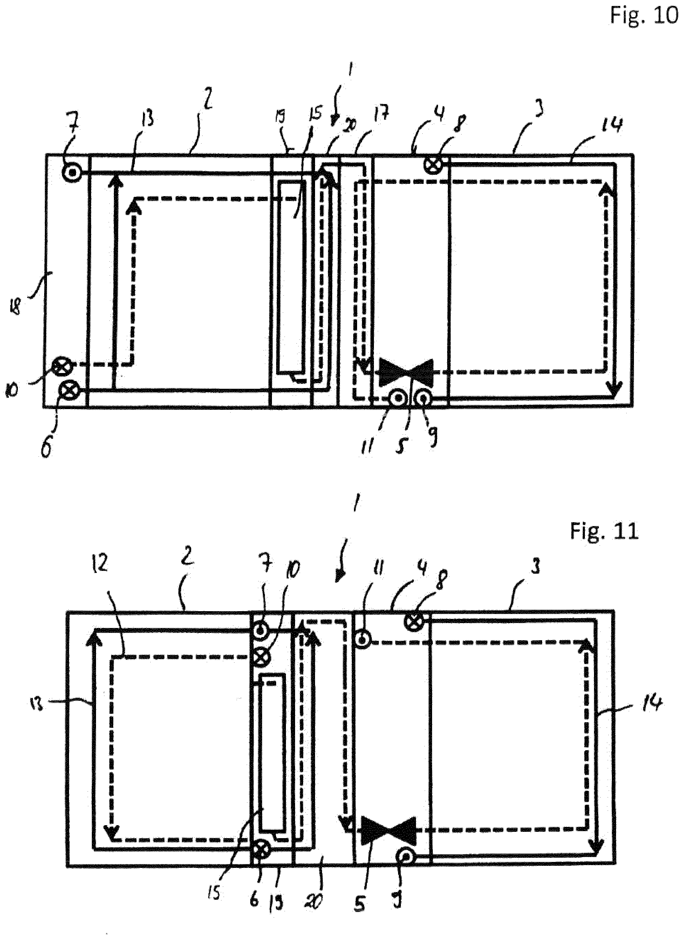

Die Fig. 10 zeigt einen Aufbau eines Heizkühlmoduls 1, wie er bereits in der Fig. 9 gezeigt wurde. Zusätzlich ist nun am linken Endbereich des Kondensatorbereichs 2 ein weiterer Bereich 18 angeordnet. Dieser trägt den ersten Zulauf 6, den ersten Ablauf 7 sowie den dritten Zulauf 10. Die restlichen Zu- und Abläufe 8, 9 und 11 sind im links neben dem Verdampferbereich 2 angeordneten Bereich 4 angeordnet. Der dritte Fluidzulauf 10 ist im unteren Bereich angeordnet, wodurch das Kältemittel im unteren Bereich in den Kondensatorbereich 2 übertritt und dort nach oben strömt, bevor es im oberen Bereich in den Bereich 19 und den daran angeordneten Sammler 15 einströmt. Am unteren Ende des Sammlers 15 tritt das Kältemittel aus und wird im Gleichstrom mit dem Kühlmittel des Kondensatorbereichs 2 innerhalb des Unterkühlbereichs 20 nach oben geführt. Dort strömt es nach rechts über in den inneren Wärmeübertrager 17, wo es wieder mit dem Kältemittel, welches den Verdampferbereich 3 bereits durchströmt hat, in einen weiteren Wärmeaustausch gebracht wird. Das Kältemittel strömt letztlich über den dritten Fluidablauf 11 am unteren Endbereich des Heizkühlmoduls 1 aus. Durch die Anordnung des dritten Zulaufs 10 im linken Bereich 18 kann eine abgeänderte Fluidführung innerhalb des Kondensatorbereichs 2 realisiert werden. Das Kühlmittel des Kondensatorbereichs 2 wird ebenfalls über den links liegenden Bereich 18 im unteren Bereich zugeführt und strömt dort sowohl im Kondensatorbereich 2 nach oben als auch im Unterkühlbereich 20 nach oben. Das Kühlmittel strömt letztlich über eine gemeinsame Strömungsstrecke durch den ersten Fluidablauf 7 aus dem Heizkühlmodul 1 aus.

In der Fig. 11 ist eine Anordnung dargestellt, welche von links aus einen Kondensatorbereich 2, einen daneben liegenden Bereich 19, einen daneben liegenden Unterkühlbereich 20, einen Bereich 4 und einen Verdampferbereich 3 aufweist. Am linken Bereich 19 ist weiterhin ein Sammler 15 angeordnet, welcher von dem Kältemittel von oben nach unten durchströmt wird. Im Unterkühlbereich 20 wird das aus dem Sammler 15 strömende Kältemittel weiterhin mit dem Kühlmittel des Kondensatorbereichs 2 in Wärmeaustausch gebracht. Das Kältemittel strömt hierzu am oberen Ende durch den dritten Zulauf 10 im Bereich 19 in das Heizkühlmodul 1 und wird dort schleifenförmig durch den Kondensatorbereich 2 geführt, so dass es am oberen Bereich des Sammlers 15 eintreten kann. Das Kältemittel wird schließlich ebenfalls U-förmig durch den Verdampferbereich 3 geführt und tritt an einem oben liegenden dritten Fluidablauf 11 aus dem Heizkühlmodul 1 aus.

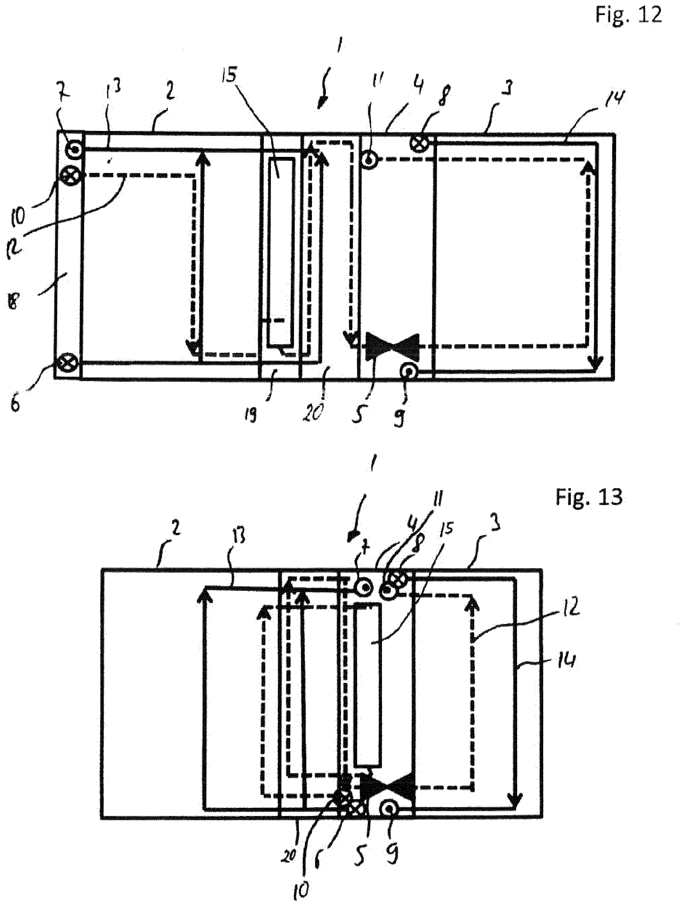

Die Fig. 12 zeigt eine Anordnung entsprechend der Fig. 11 mit dem Unterschied, dass am linken Endbereich des Kondensatorbereichs 2 ein weiterer Bereich 18 angeordnet ist. Dieser trägt den dritten Fluidzulauf 10, den ersten Fluidzulauf 6 und den ersten Fluidablauf 7. Analog der Fig. 10 wird durch diesen zusätzlichen Bereich 18 eine abgeänderte Fluidführung, insbesondere für das Kältemittel entlang der Strömungsstrecke 12 innerhalb des Heizkühlmoduls 1 ermöglicht. Das Kältemittel wird im Kondensatorbereich 2 nicht schleifenförmig geführt, sondern tritt am oberen Bereich des Heizkühlmoduls 1 ein und strömt innerhalb des Kondensatorbereichs 2 von oben nach unten und von dort in den Sammler 15. Da auch in Fig. 12 ein Unterkühlbereich 20 vorgesehen ist, wird das Kühlmittel des Kondensatorbereichs 2 sowohl innerhalb des Kondensatorbereichs 2 von unten nach oben geführt als auch im Unterkühlbereich 20. Beide Fluidströme werden dann durch einen gemeinsamen Strömungsweg aus dem ersten Fluidablauf 7 aus dem Heizkühlmodul 1 abgeführt.

Die nachfolgenden Fig. 13, 14 und 15 weisen jeweils links liegend einen Kondensatorbereich 2 auf, an welchem sich nach rechts ein Unterkühlbereich 20 anschließt und weiterhin nach rechts ein Bereich 4, an welchem ein Sammler 15 angeordnet ist. Rechts daneben ist ein Verdampferbereich 3 angeordnet. Die Fluidzuläufe und Fluidabläufe 6 bis 11 sind im Beispiel der Fig. 13 vollständig innerhalb des Bereichs 4 angeordnet. Innerhalb des Unterkühlbereichs 20 findet ein Wärmeübertrag zwischen dem Kältemittel und dem Kühlmittel des Kondensatorbereichs 2 statt. Das Kältemittel strömt insbesondere am unteren Endbereich des Bereichs 4 ein und strömt dort durch den Unterkühlbereich 20 in den Kondensatorbereich 2, von dort strömt das Kältemittel im oberen Bereich zurück bis in den Bereich 4 und in den Sammler 15. Vom unteren Endbereich des Sammlers 15 strömt das Kältemittel durch das Expansionsventil 5 im unteren Bereich des Heizkühlmoduls 1 über in den Verdampferbereich 3, wo es nach oben strömt und schließlich an einem oben liegenden dritten Fluidablauf 11 aus dem Heizkühlmodul 1 ausströmt. Die Kühlmittel sowohl für den Kondensatorbereich 2 als auch für den Verdampferbereich 3 werden jeweils in einer einfachen U-förmigen Form entlang der Strömungsstrecken 13 beziehungsweise 14 durch das Heizkühlmodul 1 geführt.

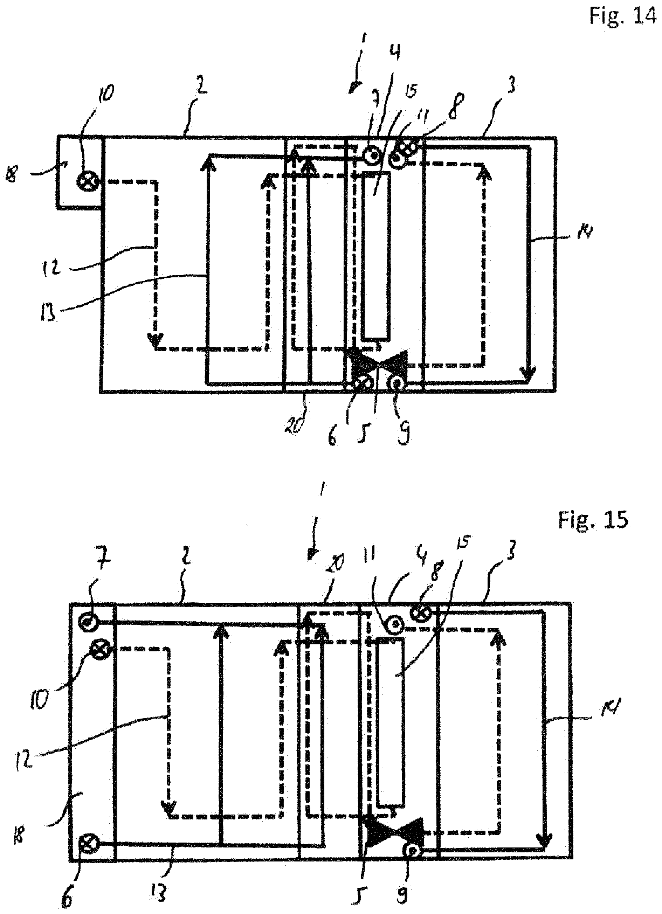

Die Fig. 14 zeigt einen Aufbau analog der Fig. 13, wobei zusätzlich am linken Endbereich ein zumindest über einen Teilbereich der Höhe des Heizkühlmoduls 1 verlaufender Bereich 18 vorgesehen ist. In diesem ist insbesondere der dritte Fluidzulauf 10 vorgesehen. Die weiteren Fluidzuläufe und Fluidabläufe 6 bis 9 und 11 sind im rechts liegenden Bereich 4 angeordnet. Durch den dritten Zulauf 10 im Bereich 18 ergibt sich eine abweichende Führung des Kältemittels innerhalb des Heizkühlmoduls 1. Das Kältemittel strömt im oberen Bereich in den Kondensatorbereich 2 über und dort nach unten und U-förmig wieder nach oben, bevor es durch den Unterkühlbereich 20 in den oberen Bereich des Sammlers 15 strömt. Von dort strömt das Kältemittel durch den unteren Bereich des Heizkühlmoduls 1 zurück in den Unterkühlbereich 20 und tritt dort in einen Wärmeaustausch mit dem Kühlmittel des Kondensatorbereichs 2, Schließlich strömt das Kältemittel nach oben und im oberen Bereich nach rechts in den Bereich 4, wo es nach unten strömt und durch das Expansionsventil 5 in den Verdampferbereich 3 strömt. Dort strömt es an den oberen Endbereich des Heizkühlmoduls 1 zurück und schließlich über den dritten Fluidablauf 11 im Bereich 4 aus dem Heizkühlmodul 1 aus.

Die Fig. 15 zeigt einen ähnlichen Aufbau, wobei links vom Kondensatorbereich 2 ein Bereich 18 über die volle Höhe des Heizkühlmoduls 1 angeordnet ist. Im Bereich 18 sind insbesondere der erste Fluidzulauf 6, der dritte Fluidzulauf 10 und der erste Fluidablauf 7 angeordnet. Die Durchströmung des Heizkühlmoduls 1 findet größtenteils analog zu dem in Fig. 14 gezeigten Ausführungsbeispiel statt. Lediglich die Führung des Kühlmittels durch den Kondensatorbereich 2 entlang der Strömungsstrecke 13 weicht ab, indem das Kühlmittel lediglich U-förmig aus dem links liegenden Bereich 18 durch den unteren Bereich des Heizkühlmoduls 1 in den Kondensatorbereich 2 und in den Unterkühlbereich 20 einströmt und dort nach oben strömt und mit einer gemeinsamen Fluidführung aus dem ersten Fluidablauf 7 im oberen Bereich ausströmt.

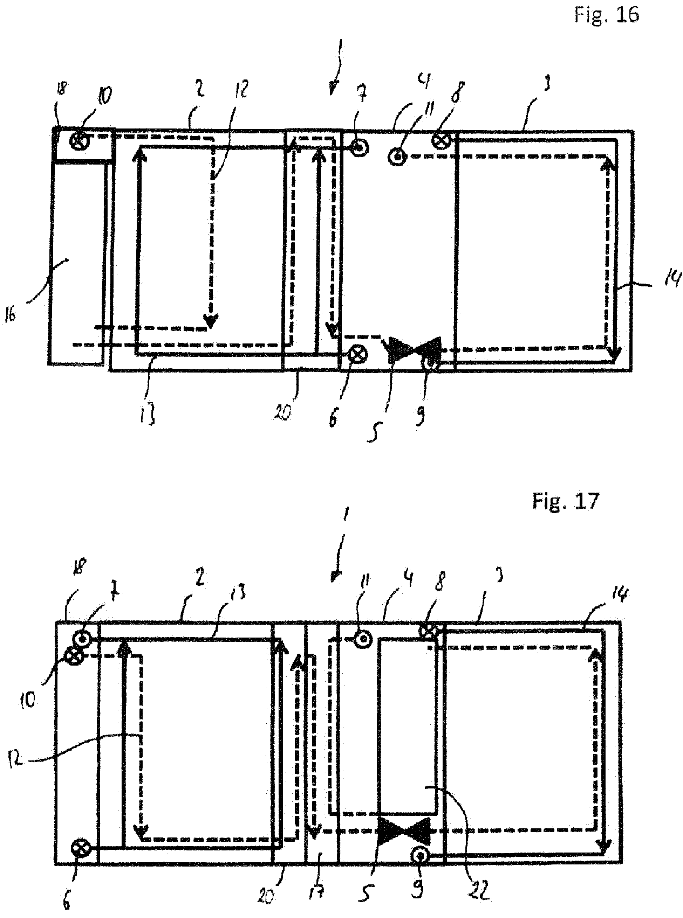

Die Fig. 16 zeigt eine Ausführungsform, wobei links neben dem Kondensatorbereich 2 ein externer Sammler 16 vorgesehen ist und weiterhin ein zumindest sich über einen Teilbereich in der Höhe erstreckender Bereich 18, welcher am oberen Ende des Heizkühlmoduls 1 angeordnet ist.

In der Fig. 16 wird das Kältemittel durch den oben liegenden dritten Fluidzufluss 10 im links liegenden Bereich 18 in das Heizkühlmodul 1 eingeströmt und strömt dort im oberen Bereich in den Kondensatorbereich 2 über. Dort strömt das Kältemittel nach unten und nach links in den externen Sammler 16 zurück. Dort durchströmt das Kältemittel den Sammler 16 und strömt schließlich am unteren Endbereich des Sammlers 16 vorbei am Kondensatorbereich 2 in den Unterkühlbereich 20, wo es nach oben strömt und U-förmig umgelenkt wird und schließlich wieder nach unten strömt. Dort findet ein Wärmeübertrag mit dem Kühlmittel des Kondensatorbereichs 2 statt.

Das Kältemittel wird am unteren Endbereich in den rechts liegenden Bereich 4 übergeleitet, bevor es durch das Expansionsventil 5 in den Verdampferbereich 3 strömt und dort U-förmig nach oben und schließlich nach links zurück in den Bereich 4 strömt. Das Kältemittel strömt dann über den dritten Fluidablauf 11 am oberen Ende des Heizkühlmoduls 1 aus. Das Kühlmittel für den Kondensatorbereich 2 strömt im rechts liegenden Bereich 4 im unteren Bereich ein und wird dort in den Unterkühlbereich 20 und den Kondensatorbereich 2 verteilt, wo es nach oben strömt und über eine gemeinsame Strömungsstrecke nach rechts zurück in den Bereich 4 strömt, wo es am oberen ersten Fluidablauf 7 ausströmt.

Die Fig. 17 zeigt ein weiteres Ausführungsbeispiel, wobei von links ein Bereich 18 angeordnet ist, welcher den ersten Fluidzulauf 6, den ersten Fluidablauf 7 und den dritten Fluidzulauf 10 aufweist, rechts daneben ist ein Kondensatorbereich 2 angeordnet, rechts daneben ein Unterkühlbereich 20, rechts daneben ein innerer Wärmeübertrager 17, rechts daneben ein Bereich 4 und rechts daneben schließlich ein Verdampferbereich 3. Das Kältemittel wird im oberen Bereich des links liegenden Bereichs 18 in das Heizkühlmodul 1 eingeströmt und strömt schließlich nach rechts über in den Kondensatorbereich 2, wo es nach unten strömt und im unteren Endbereich in die Unterkühlstrecke 20 überströmt. Dort wird das Kältemittel nach oben umgeleitet, wo ein Wärmeübertrag mit dem Kühlmittel des Kondensatorbereichs 2 stattfindet. Im oberen Bereich wird das Kältemittel in den rechts liegenden inneren Wärmeübertrager 17 überführt, wo es nach unten strömt und schließlich nach rechts durch den Bereich 4 und das darin liegende Expansionsventil 5 in den rechts liegenden Verdampferbereich 3 strömt. Dort wird es U-förmig nach oben geführt und schließlich im oberen Bereich nach links zurück, wo es in den Sammler 22 innerhalb des Bereichs 4 einströmt. Am unteren Endbereich des Sammlers 22 strömt das Kältemittel schließlich aus und zurück in den inneren Wärmeübertrager 17, wo es schließlich nach oben strömt und nach rechts zurück in den Bereich 4 strömt und aus dem dritten Fluidablauf 11 im oberen Bereich des Heizkühlmoduls 1 ausströmt.

Das Kühlmittel des Kondensatorbereichs 2 wird im unteren Bereich des linken Bereichs 18 eingeströmt und strömt in zwei parallel zueinander verlaufenden Strömungswegen sowohl im Unterkühlbereich 20 als auch im Kondensatorbereich 2 nach oben und wird dort über einen gemeinsamen Strömungsweg zu dem oben liegenden ersten Fluidablauf 7 geführt.

Der in der Fig. 17 gezeigte Sammler 22 ist ein Niederdrucksammler, welcher mit einem Kältemittel niedrigen Drucks durchströmt wird. Hierzu kann insbesondere ein Druckverminderungselement vorgesehen werden, welches beispielsweise durch eine Querschnittsverjüngung des Strömungsweges dargestellt sein kann.

Die Fig. 1 bis 17 zeigen jeweils nur eine schematische Darstellung der Durchströmung des Heizkühlmoduls 1. Insbesondere können in alternativen Ausführungsformen auch mehrere Umlenkungen vorgesehen sein, welche zu einer verbesserten Zirkulation des Kältemittels beziehungsweise des Kühlmittels innerhalb des Heizkühlmoduls 1 führen. Auch können die Strömungsrichtungen des Kühlmittels oder des Kältemittels in alternativen Ausführungsformen umgedreht werden, so dass Bereiche, die im Gleichstrom zueinander strömen, dadurch in einem Gegenstrom zueinander durchströmt werden, wodurch der Wärmeübertrag verbessert werden kann.

Die Fig. 1 bis 17 zeigen insbesondere nur eine schematische Darstellung, wodurch jedoch der Lösungsbereich hinsichtlich der Materialwahl, den Abmessungen und der Anordnung der Elemente zueinander nicht eingeschränkt wird. Insbesondere werden die unterschiedlichen Möglichkeiten der Aneinanderreihung der einzelnen Bereiche, wie dem Kondensatorbereich, dem inneren Wärmeübertrager, dem Unterkühlbereich, dem Sammler und dem Verdampferbereich durch die Ausführungsformen der Fig. 1 bis 17 nicht beschränkt. Die Fig. 1 bis 17 zeigen lediglich eine nicht abschließende Auswahl der möglichen Anordnungen.

Die Darstellungen der Fig. 1 bis 17 zeigen jeweils eine Aufsicht auf die Außenfläche der Grundplatte, an welcher die Wärmeübertragerelemente angeordnet sind. Die Grundplatte kann sich darüber hinaus auch weiter über die Wärmeübertragerelemente erstrecken. In den Fig. 1 bis 17 ist die Grundplatte mehrfach in unterschiedliche Bereiche 4, 18 und 19 unterteilt. Diese Bereiche stehen alle über einen oder mehrere Strömungskanäle im Inneren der Grundplatte in Fluidkommunikation, wodurch eine Fluidleitung über die gesamte Länge und Breite des Heizkühlmoduls erreicht werden kann. Die Fluidleitung von einem Wärmeübertragerelement in ein anderes Wärmeübertragerelement führt vorzugsweise durch die gemeinsame Grundplatte. In alternativen Ausführungsformen können jedoch auch Tauchhülsen und/oder Rohre vorgesehen sein, welche direkt durch eines der anderen Wärmeübertragerelemente geführt werden können.

Die als oben oder unten bezeichneten Bereiche entsprechen in der Ansicht der Fig. 1 bis 17 jeweils dem oberen Endbereich des Heizkühlmoduls 1 beziehungsweise dem unteren Endbereich des Heizkühlmoduls 1. Diese Richtungsangaben beziehen sich dabei jedoch lediglich auf die relative Lage des Heizkühlmoduls 1 und stellen keine absoluten Richtungen dar.

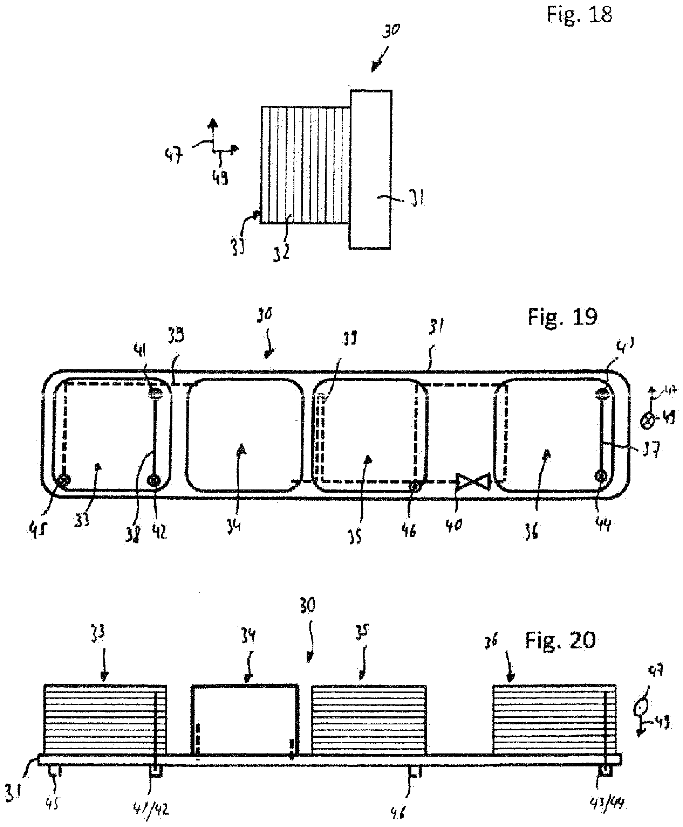

Die Fig. 18 zeigt eine Ansicht eines erfindungsgemäßen Heizkühlmoduls 30. Das Heizkühlmodul 30 ist durch eine Grundplatte 31 gebildet, auf welcher ein oder mehrere Wärmeübertragerelemente angeordnet sind. In der Fig. 18 ist auf der Grundplatte 31 ein Kondensatorbereich 33 angeordnet, welcher in Stapelscheibenbauweise aus mehreren Scheibenelementen 32 aufgebaut ist. In der Fig. 18 sind weiterhin die Raumrichtungen 47 und 49 dargestellt, welche in einem rechten Winkel aufeinander stehen. Die Raumrichtung 47 gibt dabei eine Orientierung an, in welcher das Heizkühlmodul 30 in Einbaulage vorzugsweise montiert ist. Dabei ist die Richtung 47 von unten nach oben gerichtet.

Die Fig. 19 zeigt eine seitliche Ansicht des Heizkühlmoduls 30, wobei die Sicht des Betrachters entlang der Raumrichtung 49 gerichtet ist.

Von links nach rechts sind nebeneinander auf der Grundplatte 31 des Heizkühlmoduls 30 ein Kondensatorbereich 33, ein Sammler 34, ein innerer Wärmeübertrager 35 sowie ein Verdampferbereich 36 angeordnet. Die einzelnen Bereiche 33, 34, 35 und 36 sind jeweils zueinander beabstandet entlang der gemeinsamen Grundplatte 31 angeordnet.

Die Grundplatte 31 weist einen ersten Fluidzulauf 41, einen ersten Fluidablauf 42, einen zweiten Fluidzulauf 43, einen zweiten Fluidablauf 44, einen dritten Fluidzulauf 45 und einen vierten Fluidablauf 46 auf. Durch die Fluidanschlüsse 41, 42 kann insbesondere ein Kühlmittel durch den Kondensatorbereich 33 geleitet werden. Durch die Fluidanschlüsse 43, 44 kann ein zweites Kühlmittel, insbesondere durch den Verdampferbereich 36, geleitet werden. Die Fluidanschlüsse 45, 46 dienen der Zu- und Abführung eines Kältemittels, welches mehrere der Wärmeübertragerelemente 33, 34, 35 und 36 des Heizkühlmoduls 30 durchströmen kann.

Die eigentliche Funktion des Fluidzulaufs beziehungsweise des Fluidablaufs ist hierbei insbesondere von der Förderrichtung der Kühlmittel beziehungsweise des Kältemittels abhängig. Das heißt abweichend zu der eben durchgeführten Benennung kann ein Fluidzulauf auch als Fluidablauf fungieren und umgekehrt.

Die Fluidanschlüsse 41 bis 46 sind alle in der gemeinsamen Grundplatte 31 angeordnet. Bevorzugt sind diese an einer gemeinsamen Außenfläche der Grundplatte 31 angeordnet. Dies macht insbesondere die Anbindung des Heizkühlmoduls 30 an Anschlussleitungen besonders einfach.

Im Ausführungsbeispiel der Fig. 19 kann das Kältemittel insbesondere durch den Kondensatorbereich 33 strömen und von dort in den Sammler 34 überströmen. Vom Sammler 34 kann das Kältemittel in den inneren Wärmeübertrager 35 überströmen, wo es insbesondere in einen Wärmeübertrag mit dem Kältemittel gebracht wird, welches den dem inneren Wärmeübertrager 35 nachgelagerten Verdampferbereich 36 durchströmt hat. Von dort aus dem inneren Wärmeübertrager 35 kann das Kältemittel aus der Grundplatte 31 des Heizkühlmoduls 30 ausströmen. In der Strömungsstrecke 39 des Kältemittels ist im Bereich zwischen dem inneren Wärmeübertrager 35 und dem Verdampferbereich 36 ein Expansionsventil 40 angeordnet. Dieses Expansionsventil 40 ist vorzugsweise Bestandteil der Grundplatte 31.

Die Grundplatte 31 weist eine Mehrzahl von Strömungskanälen auf, welche insbesondere die Fluidweiterleitung zwischen den einzelnen Wärmeübertragerelementen 33, 34, 35 und 36 bewerkstelligen. Die einzelnen Wärmeübertragerelemente 33 bis 36 sind dabei über Öffnungen, welche der Grundplatte 31 zugewandt sind, mit den jeweiligen Strömungskanälen der Grundplatte 31 fluidisch verbunden, so dass eine Durchströmung durch die einzelnen Wärmeübertragerelemente 33 bis 36 stattfinden kann.

Die Fig. 20 zeigt eine Ansicht von oben entgegen der Raumrichtung 47 auf das Heizkühlmodul 30. Wie bereits in Fig. 19 angedeutet, sind die Wärmeübertragerelemente 33 bis 36 zueinander beabstandet auf einer gemeinsamen Oberfläche der Grundplatte 31 angeordnet. Wie in der Darstellung der Fig. 20 zu erkennen ist, sind insbesondere der Kondensatorbereich 33, der innere Wärmeübertrager 35 sowie der Verdampferbereich 36 in Stapelscheibenbauweise durch das Aufeinanderschichten mehrerer Scheibenelemente gebildet. Die Fluidanschlüsse 41 bis 46 sind an einer gemeinsamen Außenfläche der Grundplatte 31 angeordnet. Die Fluidanschlüsse 41 bis 46 können insbesondere durch Anschlussflansche gebildet sein, an welche auf einfache Art und Weise Anschlussleitungen angebunden werden können. Die Anschlussleitungen können vorteilhafterweise über wieder lösbare Verbindungen angebunden werden. Bevorzugt kann dies ohne die Zuhilfenahme von Werkzeugen geschehen. Die Durchströmung der einzelnen Wärmeübertragerelemente 33 bis 36 kann dabei durch eine Vielzahl unterschiedlicher Aufbauten der einzelnen Elemente 33 bis 36 erreicht werden. Hierzu können unterschiedliche Strömungskanäle und Strömungsstrecken innerhalb der einzelnen Wärmeübertragerelemente 33 bis 36 ausgebildet sein.

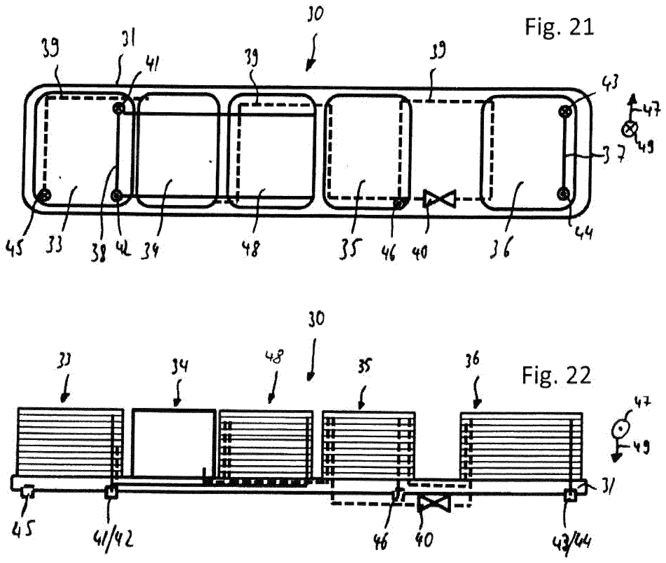

Die Fig. 21 zeigt eine Ansicht eines Heizkühlmoduls 30 in einer Orientierung, wie sie der Fig. 19 entspricht. Auf der gemeinsamen Grundplatte 31 sind von links ab nebeneinander ein Kondensatorbereich 33, ein Sammler 34, ein Unterkühlbereich 48, ein innerer Wärmeübertrager 35 sowie ein Verdampferbereich 36 angeordnet. In der Fig. 21 wird der Kondensatorbereich 33, wie in der vorausgegangenen Fig. 19 und in den nachfolgenden Figuren, entlang der Strömungsstrecke 38 von einem ersten Kühlmittel über die Fluidanschlüsse 41, 42 durchströmt. Ebenso wird der Verdampferbereich 36, wie in den vorausgegangenen und nachfolgenden Figuren, entlang der Strömungsstrecke 37 von einem zweiten Kühlmittel durch die Fluidanschlüsse 43, 44 durchströmt.

Im Unterschied zur Fig. 19 weist die Strömungsstrecke 38 aus dem Kondensatorbereich 33 abgehend eine zusätzliche Schleife auf, welche innerhalb der Grundplatte 31 vorbei am Sammler 34 zum Unterkühlbereich 48 geführt ist. Auf diese Weise ist im Unterkühlbereich 48 ein weiterer Wärmeübertrag zwischen dem Kühlmittel, welches den Kondensatorbereich 33 durchströmt hat, und dem Kältemittel, welches entlang der Strömungsstrecke 39 durch die Wärmeübertragerelemente 33, 34, 35, 36 und 48 und durch die Grundplatte 31 strömt, möglich.

Die einzelnen Elemente auf der Grundplatte 31 sind ebenfalls zueinander beabstandet angeordnet, wobei insbesondere zwischen dem inneren Wärmeübertrager 35 und dem Verdampferbereich ebenfalls ein Expansionsventil 40 angeordnet ist.

Die Fig. 22 zeigt eine Ansicht entsprechend der Blickrichtung der Fig. 20 von oben auf das Heizkühlmodul 30. In Fig. 22 sind alle Wärmeübertragerelemente 33, 48, 35 und 36 bis auf den Sammler 34 in einer Scheibenstapelbauweise aus einzelnen Scheibenelementen erstellt.

In den Fig. 21 und 22 ist insbesondere zu erkennen, dass das Kältemittel aus dem Kondensatorbereich 33 in den danebenliegenden Sammler 34 überführt wird, von wo es durch die Grundplatte 31 in den Unterkühlbereich 48 geleitet wird. Dort verursacht es, wie bereits erwähnt, mit dem Kühlmittel des Kondensatorbereichs 33 einen erneuten Wärmeübertrag. Vom Unterkühlbereich 48 wird das Kältemittel in den inneren Wärmeübertrager 35 weitergeleitet, wo ein Wärmeübertrag mit einem Anteil des Kühlmittels, welcher bereits durch den Verdampferbereich 36 geströmt ist, erreicht wird. Wie auch in den vorausgegangenen Figuren sind die Strömungskanäle in der Grundplatte 31 derart ausgebildet, dass eine entsprechend dem Ausführungsbeispiel der Fig. 22 gezeigte Fluidführung ermöglicht wird. Das Expansionsventil 40 ist in der Fig. 22, wie auch in den vorausgegangenen Figuren und nachfolgenden Figuren bevorzugt innerhalb der Grundplatte 31 oder direkt angrenzend an die Grundplatte 31 angeordnet.

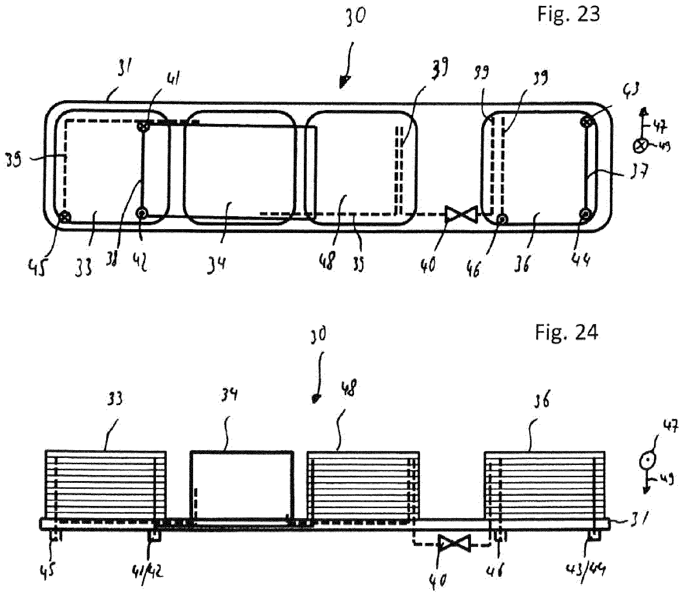

Die Fig. 23 zeigt eine Ansicht gemäß der Blickrichtung der Fig. 21 auf ein Heizkühlmodul 30, an weichem ein Kondensatorbereich 33 neben einem Sammler 34, einem Unterkühlbereich 48 und einem Verdampferbereich 36 angeordnet ist. Der Kondensatorbereich 33 wird mit einem ersten Kühlmittel entlang der Strömungsstrecke 38 durchströmt. Das Kühlmittel wird weiterhin auch über eine Schleife, welche durch Strömungskanäle in der Grundplatte 31 gebildet ist, zum Unterkühlbereich 48 geleitet. Analog der Fig. 21 wird der Unterkühlbereich 48 ebenfalls von diesem Kühlmittel durchströmt.

Das Kältemittel durchströmt nacheinander den Kondensatorbereich 33, den Sammler 34, den Unterkühlbereich 48 und den Verdampferbereich 36. Dort findet ein Wärmeaustausch zwischen dem Kältemittel und dem ersten beziehungsweise dem zweiten Kühlmittel analog zu dem Ausführungsbeispiel der Fig. 21 statt.

Der Kondensatorbereich 33, der Unterkühlbereich 48 und der Verdampferbereich 36 sind ebenfalls jeweils durch eine Aufeinanderstapelung mehrerer Scheibenelemente gebildet, während der Sammler 34 bevorzugt aus einem einzelnen Element gebildet ist. In alternativen Ausführungsformen kann jedoch auch der Sammler 34 in einer Bauweise aus aufeinandergestapelten Scheibenelementen gebildet sein.

Die Fig. 24, welche eine Ansicht entgegen der Raumrichtung 47 von oben auf das Heizkühlmodul 30 zeigt, zeigt wiederum die Anordnung der verschiedenen Strömungskanäle innerhalb der Grundplatte 31.

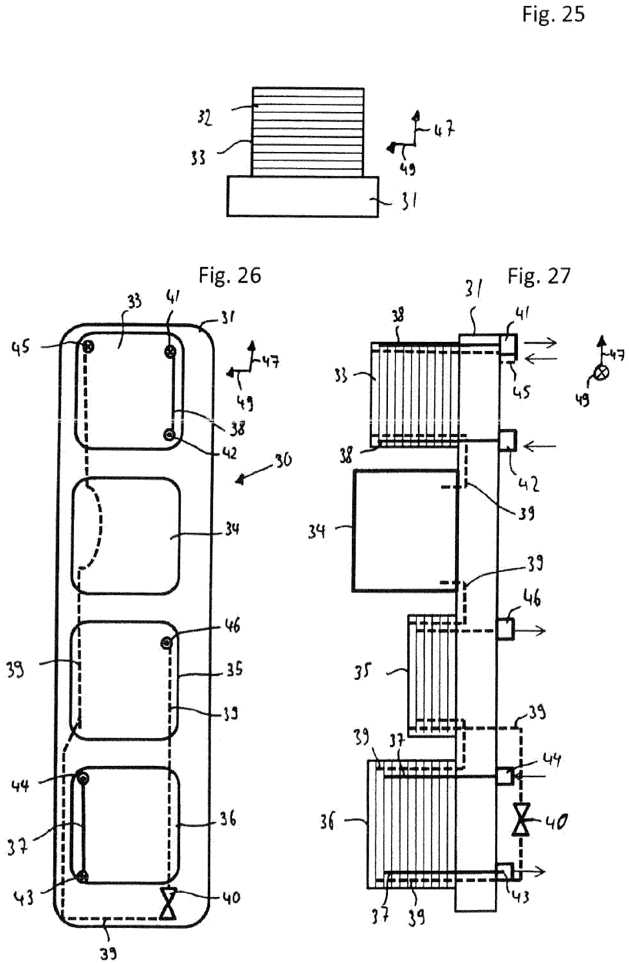

Die Fig. 25 zeigt eine alternative Ausrichtung eines Heizkühlmoduls 30, welches einen Kondensatorbereich 33 auf einer Grundplatte 31 zeigt. Die Raumrichtung 47, welche von unten nach oben in einer gedachten Einbauendlage gerichtet ist, ist nun von der Grundplatte 31 hin zum der Grundplatte 31 abgewandten Endbereich des Kondensatorbereichs 33 gerichtet. Die zweite Raumrichtung 49 steht in einem rechten Winkel zur Raumrichtung 47 parallel zur Grundplatte 31.

Die Fig. 26 zeigt eine alternative Ausrichtung eines Heizkühlmoduls 30. Die Raumrichtung 47, welche entlang einer Einbaulage von unten nach oben gerichtet ist, verläuft nun parallel zur Langseite der Grundplatte 31. In der gedachten Einbauendlage sind somit die Wärmeübertragerelemente 33, 34, 35 und 36 von oben nach unten angeordnet. Dabei ist der Kondensatorbereich 33 obenliegend, darunter der Sammler 34, darunter der innere Wärmeübertrager 35 und darunter der Verdampferbereich 36 an einer gemeinsamen Außenfläche der Grundplatte 31 angeordnet. Der Kondensatorbereich 33 wird weiterhin entlang der Strömungsstrecke 38 von einem ersten Kühlmittel in einer Richtung, welche parallel zur Raumrichtung 47 liegt, durchströmt. Ebenso wird der Verdampferbereich 36 von einem Kühlmittel entlang der Strömungsstrecke 47 zwischen den Fluidanschlüssen 43 und 44 in einer Richtung parallel zur Raumrichtung 47 durchströmt.

Das Kältemittel wird, wie in den vorausgegangenen Figuren, vom Kondensatorbereich 33 über den Sammler 34, den inneren Wärmeübertrager 35 und den Verdampferbereich 36 durch ein Expansionsventil 40 geführt, wobei in den unterschiedlichen Bereichen ein Wärmübertrag mit dem Kältemittel selbst beziehungsweise mit den Kühlmittel entsteht.

Die Fig. 27 zeigt eine Ansicht des Heizkühlmoduls 30 der Fig. 26, wobei der Blick des Betrachters entlang der Raumrichtung 49 der Fig. 26 gerichtet ist. Die Grundplatte 31 weist dabei nach links abgehend die Wärmeübertragerelemente 33 bis 36 auf und nach rechts abgehend die Fluidanschlüsse 41 bis 46. Weiterhin sind innerhalb der Grundplatte 31 die Strömungskanäle zur fluidischen Verbindung der einzelnen Wärmeübertragerelemente 33 bis 36 angeordnet.

Im Unterschied zu den vorausgegangenen Figuren ist in der Fig. 27 dargestellt, dass die einzelnen Wärmeübertragerelemente 33 bis 36 insbesondere unterschiedliche Größenausdehnungen aufweisen können. So können die einzelnen Bereiche insbesondere abhängig von der benötigten Kühl- oder Heizleistung dimensioniert werden.

Die einzelnen Wärmeübertragerelemente 33 bis 36 und 48 können insbesondere zueinander thermisch isoliert an der Grundplatte 31 angebracht sein. Dies gilt für alle bisher gezeigten Ausführungsbeispiele der Fig. 1 bis 27. Auf diese Weise kann ein ungewünschter Wärmeübertrag zwischen den einzelnen Wärmeübertragerelementen 33, 34, 35, 36 und 48 beziehungsweise den innerhalb der Wärmeübertragerelemente 33, 34, 35, 36 und 48 strömenden Kühlmitteln und dem Kältemittel reduziert werden.

Wie bereits in den vorausgegangenen Figuren erwähnt, kann die endgültige Montagerichtung der einzelnen Heizkühlmodule 30 voneinander abweichen, ebenso wie die Durchströmungsrichtung der einzelnen Strömungskanäle und Strömungsstrecken 37, 38 und 39. Auf diese Weise können unterschiedliche Durchströmungsszenarien innerhalb der Heizkühlmodule 30 erreicht werden.

Weiterhin kann in jedem einzelnen Wärmeübertragerelement 33 bis 36 und 48 aufgrund der Anordnung der einzelnen Scheibenelemente beziehungsweise der Öffnungen zwischen den Scheibenelementen oder der Strukturierung des Sammlers 34 eine abweichende Durchströmung erzeugt werden. Hierbei können insbesondere Bereiche erzeugt werden, in welchen Kältemittel und Kühlmittel beziehungsweise Kältemittel und Kältemittel im Gleichstrom oder im Gegenstrom zueinander strömen. Hier sind dem Aufbau der einzelnen Wärmeübertragerelemente 33 bis 36 und 48 keine Grenzen durch die Darstellung der Fig. 18 bis 27 gesetzt. Die einzelnen Wärmeübertragerelemente 33 bis 36 und 48 können als, insbesondere entsprechend den aus dem Stand der Technik bekannten Lösungen für einzelne Kondensatorbereiche, Verdampferbereiche, Sammler, innere Wärmeübertrager oder Unterkühlbereiche aufgebaut sein. Die Fig. 18 bis 27 haben diesbezüglich keine beschränkende Wirkung.

In Ergänzung zu den Fig. 18 bis 27 können die einzelnen Durchströmungskonzepte, welche in schematischen Ansichten in den Fig. 1 bis 17 dargestellt sind, ebenfalls auf ein analog der erfindungsgemäßen Ausführungen der Fig. 18 bis 27 ausgeführtes Heizkühlmodul 30 übertragen werden. Die Fig. 1 bis 17 stellen hierbei insbesondere eine nicht abschließende Aufzählung von Verbindungsmöglichkeiten der einzelnen Wärmeübertragerelemente untereinander dar. Diese können ohne Einschränkung auf die Bauformen der Fig. 18 bis 27 übertragen werden.

## Patentansprüche

1. Heizkühlmodul (30) zum Temperieren von zumindest zwei Kühlmittelkreisläufen, mit einem Verdampferbereich (36) und mit einem Kondensatorbereich (33), wobei der Verdampferbereich (36) eine erste Strömungsstrecke (37) aufweist, welche von einem ersten Kühlmittel durchströmbar ist, und der Kondensatorbereich (33) eine zweite Strömungsstrecke (38) aufweist, welche von einem zweiten Kühlmittel durchströmbar ist, und wobei das Heizkühlmodul (30) eine dritte Strömungsstrecke (39) aufweist, welche von einem Kältemittel durchströmbar ist, wobei der Verdampferbereich (36) und der Kondensatorbereich (33) auf einer gemeinsamen Grundplatte (31) angeordnet sind, **dadurch gekennzeichnet dass**
die Grundplatte (31) die Fluidzuläufe (41, 42, 43, 44, 45, 46) und die Fluidabläufe (41, 42, 43, 44, 45, 46) für das erste Kühlmittel, das zweite Kühlmittel und das Kältemittel aufweist, und die Grundplatte (31) Strömungskanäle aufweist, welche jeweils von einem der Kühlmittel oder dem Kältemittel durchströmbar sind, wobei der Verdampferbereich (36) und der Kondensatorbereich (33) über die Strömungskanäle mit den jeweiligen Fluidzuläufen (41, 42, 43, 44, 45, 46) und den jeweiligen Fluidabläufen (41, 42, 43, 44, 45, 46) der Grundplatte (31) in Fluidkommunikation stehen.

2. Heizkühlmodul (30) nach Anspruch 1, **dadurch gekennzeichnet, dass** an oder in der Grundplatte (31) ein thermostatisches Expansionsventil (40) angeordnet ist, welches von dem Kältemittel durchströmbar ist.

3. Heizkühlmodul (30) nach einem der vorhergehenden Ansprüche, **dadurch gekennzeichnet, dass** an oder in der Grundplatte (31) ein Sammler (34) angeordnet ist, welcher zur Sammlung und/oder Bevorratung und/oder zur Filterung und/oder zur Trocknung des Kältemittels dient.

4. Heizkühlmodul (30) nach einem der vorhergehenden Ansprüche, **dadurch gekennzeichnet, dass** ein innerer Wärmeübertrager (35) und/oder ein Unterkühlbereich (48) an der Grundplatte (31) angeordnet ist, wobei der innere Wärmeübertrager (35) und/oder der Unterkühlbereich (48) ebenfalls mit Strömungskanälen der Grundplatte (31) in Fluidkommunikation steht und durchströmbar ist.

5. Heizkühlmodul (30) nach einem der vorhergehenden Ansprüche, **dadurch gekennzeichnet, dass** der Verdampferbereich (36) und/oder der Kondensatorbereich (33) und/oder der innere Wärmeübertrager (35) und/oder der Unterkühlbereich (48) und/oder der Sammler (34) in Stapelscheibenbauweise durch eine Aufeinanderstapelung mehrerer Scheibenelemente (32) ausgebildet ist.

6. Heizkühlmodul (30) nach einem der vorhergehenden Ansprüche, **dadurch gekennzeichnet, dass** die auf der Grundplatte (31) angeordneten Wärmeübertragerelemente (33, 34, 35, 36, 48) in einer Richtung quer zur Stapelrichtung eines der Scheibenstapel zueinander benachbart an einer Außenfläche der Grundplatte (31) angeordnet sind.

7. Heizkühlmodul (30) nach einem der vorhergehenden Ansprüche, **dadurch gekennzeichnet, dass** der Kondensatorbereich (33) und/oder der Verdampferbereich (36) und/oder der Sammler (34) und/oder der innere Wärmeübertrager (35) und/oder der Unterkühlbereich (48) durch gemeinsame Scheibenelemente gebildet sind, wobei die einzelnen Wärmeübertragerelemente (33, 34, 35, 36, 48) durch Trennelemente in den jeweiligen Scheibenelementen voneinander fluidisch getrennt sind.

8. Heizkühlmodul (30) nach einem der vorhergehenden Ansprüche, **dadurch gekennzeichnet, dass** die Grundplatte (31) Strömungskanäle aufweist, durch weiche Wärmeübertragerelemente (33, 34, 35, 36, 48), die nicht direkt zueinander benachbart angeordnete sind, fluidisch miteinander verbindbar sind.

9. Heizkühlmodul (30) nach einem der vorhergehenden Ansprüche, **dadurch gekennzeichnet, dass** die Grundplatte (31) mehrteilig ausgebildet ist, wobei die Strömungskanäle im Inneren der Grundplatte (31) angeordnet sind und durch ein Abdeckelement oder mehrere Abdeckelemente nach außen überdeckt sind.

10. Heizkühlmodul (30) nach einem der vorhergehenden Ansprüche, **dadurch gekennzeichnet, dass** die Fluidzuläufe (41, 42, 43, 44, 45, 46) und die Fluidabläufe (41, 42, 43, 44, 45, 46) an einer gemeinsamen Außenfläche der Grundplatte (31) angeordnet sind.

11. Heizkühlmodul (30) nach einem der vorhergehenden Ansprüche, **dadurch gekennzeichnet, dass** die Außenfläche der Grundplatte (31), welche die Fluidzuläufe (41, 42, 43, 44, 45, 46) und die Fluidabläufe (41, 42, 43, 44, 45, 46) aufweist, der Außenfläche, an welcher die Wärmeübertragerelemente (33, 34, 35, 36, 48) angeordnet sind, gegenüberliegt.

12. Heizkühlmodul (30) nach einem der vorhergehenden Ansprüche, **dadurch gekennzeichnet, dass** die einzelnen Wärmeübertragerelemente (33, 34, 35, 36, 48) thermisch voneinander isoliert sind.

13. Heizkühlmodul (30) nach einem der vorhergehenden Ansprüche, **dadurch gekennzeichnet, dass** die einzelnen Wärmeübertragerelemente (33, 34, 35, 36, 48) unterschiedliche Außenabmessungen und/oder unterschiedliche Innenvolumen aufweisen.

14. Heizkühlmodul (30) nach einem der vorhergehenden Ansprüche, **dadurch gekennzeichnet, dass** die Grundplatte (31) Positionierelemente aufweist, welche einen Aufnahmebereich für zumindest eines der Wärmeübertragerelemente (33, 34, 35, 36, 48) ausbilden.

## Claims

1. A heating and cooling module (30) for controlling the temperature of at least two coolant circuits, having an evaporator region (36) and having a condenser region (33), wherein the evaporator region (36) has a first flow section (37) which can be traversed by a first coolant, and the condenser region (33) has a second flow section (38) which can be traversed by a second coolant, and wherein the heating and cooling module (30) has a third flow section (39) which can be traversed by a refrigerant, wherein the evaporator region (36) and the condenser region (33) are arranged on a common base plate (31), **characterised in that** the base plate (31) has the fluid inlets (41, 42, 43, 44, 45, 46) and the fluid outlets (41, 42, 43, 44, 45, 46) for the first coolant, the second coolant and the refrigerant, and the base plate (31) has flow channels which can in each case be traversed by one of the coolants or the refrigerant, wherein the evaporator region (36) and the condenser region (33) are in fluid communication with the respective fluid inlets (41, 42, 43, 44, 45, 46) and the respective fluid outlets (41, 42, 43, 44, 45, 46) of the base plate (31) via the flow channels.

2. The heating and cooling module (30) according to claim 1, **characterised in that** on or in the base plate (31), a thermostatic expansion valve (40) is arranged which can be traversed by the refrigerant.

3. The heating and cooling module (30) according to any one of the preceding claims, **characterised in that** on or in the base plate (31) a collector (34) is arranged which is used for collecting and/or storing and/or filtering and/or drying the refrigerant.

4. The heating and cooling module (30) according to any one of the preceding claims, **characterised in that** an internal heat exchanger (35) and/or a sub-cooling region (48) is arranged on the base plate (31), wherein the internal heat exchanger (35) and/or the sub-cooling section (48) is also in fluid communication with flow channels of the base plate (31) and can be traversed.

5. The heating and cooling module (30) according to any one of the preceding claims, **characterised in that** the evaporator region (36) and/or the condenser region (33) and/or the internal heat exchanger (35) and/or the sub-cooling section (48) and/or the collector (34) is designed in a stacked-plate design by a succession of multiple disk elements (32).

6. The heating and cooling module (30) according to any one of the preceding claims, **characterised in that** the heat transfer elements (33, 34, 35, 36, 48) disposed on the base plate (31) are arranged adjacent to one another on an outer surface of the base plate (31) in a direction transverse to the stacking direction of one of the disk stacks.

7. The heating and cooling module (30) according to any one of the preceding claims, **characterised in that** the condenser region (33) and/or the evaporator region (36) and/or the collector (34) and/or the internal heat exchanger (35) and/or the sub-cooling section (48) are formed by common disk elements, wherein the individual heat transfer elements (33, 34, 35, 36, 48) are fluidly separated from one another by separating elements in the respective disk elements.

8. The heating and cooling module (30) according to any one of the preceding claims, **characterised in that** the base plate (31) comprises flow channels through which heat transfer elements (33, 34, 35, 36, 48) that are not arranged directly adjacent to one another are fluidly connected to one another.

9. The heating and cooling module (30) according to any one of the preceding claims, **characterised in that** the base plate (31) is designed in several parts, wherein the flow channels are arranged in the interior of the base plate (31) and are covered by a covering element or a plurality of covering elements to the outside.

10. The heating and cooling module (30) according to any one of the preceding claims, **characterised in that** the fluid inlets (41, 42, 43, 44, 45, 46) and the fluid outlets (41, 42, 43, 44, 45, 46) are arranged on a common outer surface of the base plate (31).

11. The heating and cooling module (30) according to any one of the preceding claims, **characterised in that** the outer surface of the base plate (31) having the fluid inlets (41, 42, 43, 44, 45, 46) and the fluid outlets (41, 42, 43, 44, 45, 46) lies opposite the outer surface on which the heat transfer elements (33, 34, 35, 36, 48) are arranged.

12. The heating and cooling module (30) according to any one of the preceding claims, **characterised in that** the individual heat transfer elements (33, 34, 35, 36, 48) are thermally insulated from each other.

13. The heating and cooling module (30) according to any one of the preceding claims, **characterised in that** the individual heat transfer elements (33, 34, 35, 36, 48) have different outer dimensions and/or different internal volumes.

14. The heating and cooling module (30) according to any one of the preceding claims, **characterised in that** the base plate (31) has positioning elements which form a receiving area for at least one of the heat transfer elements (33, 34, 35, 36, 48).

## Revendications

1. Module de chauffage et de refroidissement (30) servant à tempérer au moins deux circuits de liquide de refroidissement, ledit module de chauffage et de refroidissement comprenant une zone d'évaporateur (36) et une zone de condenseur (33), où la zone d'évaporateur (36) présente une première voie d'écoulement (37) qui peut être traversée par un premier liquide de refroidissement, et la zone de condenseur (33) présente une deuxième voie d'écoulement (38) qui peut être traversée par un second liquide de refroidissement, et où le module de chauffage et de refroidissement (30) présente une troisième voie d'écoulement (39) qui peut être traversée par un fluide frigorigène, où la zone d'évaporateur (36) et la zone de condenseur (33) sont disposées sur une plaque de base commune (31), **caractérisé en ce que** la plaque de base (31) présente les arrivées de fluide (41, 42, 43, 44, 45, 46) et les évacuations de fluide (41, 42, 43, 44, 45, 46) pour le premier liquide de refroidissement, pour le second liquide de refroidissement et pour le fluide frigorigène, et la plaque de base (31) présente des conduits d'écoulement qui peuvent être traversés à chaque fois par l'un des liquides de refroidissement ou par le fluide frigorigène, où la zone d'évaporateur (36) et la zone de condenseur (33) sont en communication fluidique, par les conduits d'écoulement, avec les arrivées de fluide respectives (41, 42, 43, 44, 45, 46) et avec les évacuations de fluide respectives (41, 42, 43, 44, 45, 46) de la plaque de base (31).

2. Module de chauffage et de refroidissement (30) selon la revendication 1, **caractérisé en ce qu'**un détendeur thermostatique (40) est disposé sur ou dans la plaque de base (31), lequel détendeur peut être traversé par le fluide frigorigène.

3. Module de chauffage et de refroidissement (30) selon l'une des revendications précédentes, **caractérisé en ce qu'**un collecteur (34) est disposé sur ou dans la plaque de base (31), lequel collecteur sert à l'accumulation et / ou au stockage et / ou à la filtration et / ou à la disseccation du fluide frigorigène.

4. Module de chauffage et de refroidissement (30) selon l'une quelconque des revendications précédentes, **caractérisé en ce qu'**un échangeur de chaleur intérieur (35) et / ou une zone de surrefroidissement (48) est disposé (e) sur la plaque de base (31), où l'échangeur de chaleur intérieur (35) et / ou la zone de surrefroidissement (48) est également en communication fluidique avec des conduits d'écoulement de la plaque de base (31) et peut être traversé(e) par un fluide.

5. Module de chauffage et de refroidissement (30) selon l'une quelconque des revendications précédentes, **caractérisé en ce que** la zone d'évaporateur (36) et / ou la zone de condenseur (33) et / ou l'échangeur de chaleur intérieur (35) et / ou la zone de surrefroidissement (48) et / ou le collecteur (34) est configuré (e) en étant du type de construction à plaques empilées de plusieurs éléments à plaques (32) empilés les uns sur les autres.

6. Module de chauffage et de refroidissement (30) selon l'une quelconque des revendications précédentes, **caractérisé en ce que** les éléments (33, 34, 35, 36, 48) de l'échangeur de chaleur se trouvant sur la plaque de base (31) sont disposés sur une surface extérieure de la plaque de base (31), en étant contigus les uns aux autres dans une direction transversale par rapport à la direction d'empilement de l'une des piles de plaques.

7. Module de chauffage et de refroidissement (30) selon l'une quelconque des revendications précédentes, **caractérisé en ce que** la zone de condenseur (33) et / ou la zone d'évaporateur (36) et / ou le collecteur (34) et / ou l'échangeur de chaleur intérieur (35) et / ou la zone de surrefroidissement (48) sont formé(e)s par des éléments à plaques communs, où les différents éléments (33, 34, 35, 36, 48) de l'échangeur de chaleur sont séparés fluidiquement les uns des autres, par des éléments de séparation placés dans les éléments à plaques respectifs.

8. Module de chauffage et de refroidissement (30) selon l'une quelconque des revendications précédentes, **caractérisé en ce que** la plaque de base (31) présente des conduits d'écoulement par lesquels des éléments (33, 34, 35, 36, 48) de l'échangeur de chaleur, qui sont disposés en n'étant pas directement contigus les uns aux autres, peuvent être reliés fluidiquement les uns aux autres.

9. Module de chauffage et de refroidissement (30) selon l'une quelconque des revendications précédentes, **caractérisé en ce que** la plaque de base (31) est configurée en plusieurs parties, où les conduits d'écoulement sont disposés à l'intérieur de la plaque de base (31) et sont recouverts, vers l'extérieur, par un élément de recouvrement ou par plusieurs éléments de recouvrement.

10. Module de chauffage et de refroidissement (30) selon l'une quelconque des revendications précédentes, **caractérisé en ce que** les arrivées de fluide (41, 42, 43, 44, 45, 46) et les évacuations de fluide (41, 42, 43, 44, 45, 46) sont disposées sur une surface extérieure commune de la plaque de base (31).

11. Module de chauffage et de refroidissement (30) selon l'une quelconque des revendications précédentes, **caractérisé en ce que** la surface extérieure de la plaque de base (31), qui présente les arrivées de fluide (41, 42, 43, 44, 45, 46) et les évacuations de fluide (41, 42, 43, 44, 45, 46), est placée en faisant face à la surface extérieure sur laquelle sont disposés les éléments (33, 34, 35, 36, 48) de l'échangeur de chaleur.

12. Module de chauffage et de refroidissement (30) selon l'une quelconque des revendications précédentes, **caractérisé en ce que** les différents éléments (33, 34, 35, 36, 48) de l'échangeur de chaleur sont isolés thermiquement les uns des autres.

13. Module de chauffage et de refroidissement (30) selon l'une quelconque des revendications précédentes, **caractérisé en ce que** les différents éléments (33, 34, 35, 36, 48) de l'échangeur de chaleur présentent différentes dimensions extérieures et / ou différents volumes intérieurs.

14. Module de chauffage et de refroidissement (30) selon l'une quelconque des revendications précédentes, **caractérisé en ce que** la plaque de base (31) présente des éléments de positionnement qui forment une zone de logement pour au moins l'un des éléments (33, 34, 35, 36, 48) de l'échangeur de chaleur.
